(19) **Europäisches Patentamt / European Patent Office / Office européen des brevets**

(11) **EP 4 451 763 A1**

(12) **EUROPEAN PATENT APPLICATION**
published in accordance with Art. 153(4) EPC

(43) Date of publication:
**23.10.2024 Bulletin 2024/43**

(21) Application number: **21968194.7**

(22) Date of filing: **16.12.2021**

(51) International Patent Classification (IPC):
***H04W 72/04*** (2023.01)     ***H04L 27/26*** (2006.01)

(52) Cooperative Patent Classification (CPC):
**H04L 27/26; H04W 72/04**

(86) International application number:
**PCT/JP2021/046614**

(87) International publication number:
**WO 2023/112279 (22.06.2023 Gazette 2023/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-ku**
**Tokyo 100-6150 (JP)**

(72) Inventors:
• **ECHIGO, Haruhi**
 **Tokyo 100-6150 (JP)**
• **MATSUMURA, Yuki**
 **Tokyo 100-6150 (JP)**
• **SHIBAIKE, Naoya**
 **Tokyo 100-6150 (JP)**
• **HARADA, Hiroki**
 **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, RADIO COMMUNICATION METHOD, AND BASE STATION**

(57) A terminal according to one aspect of the present disclosure includes a receiving section that receives one or more reference signal configurations by using (Radio Resource Control (RRC)) signaling and that receives information related to a reference signal by using at least one of downlink control information (DCI) and a Medium Access Control (MAC) control element (CE), and a control section that controls, based on the reference signal configuration and the information related to the reference signal, mapping of the reference signal. According to one aspect of the present disclosure, it is possible to implement suitable RS resource use.

FIG. 4A

DMRS

FREQUENCY

TIME

**(Cont. next page)**

EP 4 451 763 A1

FIG. 4B

DMRS

FREQUENCY

TIME

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication technologies, it is studied that artificial intelligence (AI) technologies, such as machine learning (ML), are utilized for control and management of a network/device and the like. For example, it is studied to reduce a reference signal (RS) resource by using a complement by AI/ML.

However, a study of concrete details of the RS resource reduction has not yet been advanced. Unless these are defined appropriately, achievement of high-efficiency resource use may fail, and improvement in communication throughput or communication quality may be suppressed.

Thus, an object of the present disclosure is to provide a terminal, a radio communication method, and a base station that can implement suitable RS resource use.

Solution to Problem

A terminal according to one aspect of the present disclosure includes a receiving section that receives one or more reference signal configurations by using (Radio Resource Control (RRC)) signaling and that receives information related to a reference signal by using at least one of downlink control information (DCI) and a Medium Access Control (MAC) control element (CE), and a control section that controls, based on the reference signal configuration and the information related to the reference signal, mapping of the reference signal.

Advantageous Effects of Invention

According to one aspect of the present disclosure, it is possible to implement suitable RS resource use.

Brief Description of Drawings

[FIG. 1] FIG. 1 is a diagram to show an example of reference signal configuration according to option 1-1 in a first embodiment.
[FIG. 2] FIG. 2 is a diagram to show an example of reference signal configuration according to option 1-2 in the first embodiment.
[FIG. 3] FIG. 3 is a diagram to show an example of a reference signal-related condition according to the first embodiment.
[FIG. 4] FIGS. 4A and 4B are diagrams to show examples of sampling of a reference signal.
[FIG. 5] FIGS. 5A and 5B are diagrams to show examples of mapping of a reference signal according to a second embodiment.
[FIG. 6] FIG. 6 is a diagram to show another example of the mapping of the reference signal according to the second embodiment.
[FIG. 7] FIGS. 7A and 7B are diagrams to show examples of mapping of a reference signal according to option 2-2-1 in the second embodiment.
[FIG. 8] FIG. 8 is a diagram to show an example of mapping of a reference signal according to option 2-2-2 in the second embodiment.
[FIG. 9] FIGS. 9A and 9B are diagrams to show examples of determination of a sequence according to option 2-3-2 in the second embodiment.
[FIG. 10] FIGS. 10A and 10B are diagrams to show examples of application of information related to a reference signal according to option 4-1 in a fourth embodiment.
[FIG. 11] FIGS. 11A and 11B are diagrams to show examples of application of information related to a reference signal according to option 4-2 in the fourth embodiment.
[FIG. 12] FIG. 12 is a diagram to show an example of overlap between reference signals according to a fifth embodiment.

[FIG. 13] FIG. 13 is a diagram to show an example of determination of PDSCH decoding time according to option 6-2 in a sixth embodiment.

[FIG. 14] FIG. 14 is a diagram to show an example of a bitwidth of a MAC CE / DCI field according to option 7-1 in a seventh embodiment.

[FIG. 15] FIG. 15 is a diagram to show an example of a schematic structure of a radio communication system according to one embodiment.

[FIG. 16] FIG. 16 is a diagram to show an example of a structure of a base station according to one embodiment.

[FIG. 17] FIG. 17 is a diagram to show an example of a structure of a user terminal according to one embodiment.

[FIG. 18] FIG. 18 is a diagram to show an example of a hardware structure of the base station and the user terminal according to one embodiment.

[FIG. 19] FIG. 19 is a diagram to show an example of a vehicle according to one embodiment.

Description of Embodiments

(Application of Artificial Intelligence (AI) Technology for Radio Communication)

For future radio communication technologies, it is studied that AI technologies are utilized for control and management of a network/device and the like.

For example, for the future radio communication technologies, especially for communication using a beam, higher accuracy of channel estimation (which may be referred to as channel measurement) is desired for beam management, decoding of a received signal, and the like.

The channel estimation may be performed by using, for example, at least one of a channel state information reference signal (CSI-RS), a synchronization signal (SS), a synchronization signal / broadcast channel (Synchronization Signal / Physical Broadcast Channel (SS/PBCH)) block, a demodulation reference signal (DMRS), a sounding reference signal (SRS), and the like.

For future radio communication technologies, it is studied that artificial intelligence (AI) technologies, such as machine learning (ML), are utilized for control and management of a network/device and the like.

For example, it is studied to reduce, by using a complement by AI/ML, a reference signal (RS) resource while channel estimation accuracy is maintained.

For example, when learning using AI/ML is not performed (not finished) in a terminal (also referred to as a user terminal, User Equipment (UE), or the like) / base station, it is conceivable that requirements and the like below are necessary for achieving RS reception measurement with possible high channel estimation accuracy or accurate RS reception measurement used for learning:

- Transmission and reception of RS in broadband (contribution to improvement in reception quality)
- RS repetition transmission for synthesis of channel/-signal received in reception side (synthesized reception) (contribution to improvement in reception quality)
- High time/frequency density of RS resource (contribution to acquisition of appropriate correlation between time/frequencies)

Considering these, it is conceivable that allocation of an appropriate RS varies between a case where AI/ML learning is sufficiently performed and a case where it is not the case. Thus, it is preferable that a framework of a method for dynamically allocating an appropriate RS resource is introduced.

However, a study of concrete details of the framework has not yet been advanced. Unless these are defined appropriately, achievement of high-efficiency resource use may fail, and improvement in communication throughput or communication quality may be suppressed.

In an existing specification (Rel. 16 (or earlier versions)), a specification of configuration of reference signal (DMRS/PTRS) mapping to be performed at granularity below has been drafted:

- For each configured grant PUSCH
- For each DCI format (DCI format 0_1/0_2/1_1/1_2)
- For each mapping type A or B for PUSCH/PDSCH
- Whether PUSCH for communicating massage A (Msg.A PUSCH)

For achieving such high-efficiency resource use as that mentioned above, it is desirable that more flexible and dynamic configuration of reference signal mapping is introduced.

Thus, the inventors of the present invention came up with the idea of a method for suitable RS resource allocation/use.

Note that respective embodiments of the present disclosure may be applied to a case where AI/ML/-prediction is not used. In this case, even without RRC reconfiguration, it is possible to change an RS configuration while reducing delay/overhead.

In one embodiment of the present disclosure, the UE/BS performs training of an ML model in a training mode, and performs the ML model in a test mode (also referred to as a testing mode or the like). In the test mode, validation of accuracy of the ML model trained in the training mode (trained ML model) may be performed.

In the present disclosure, the UE/BS may input, to the ML model, channel state information, a reference signal measurement value, and the like to output highly accurate channel state information / measured value / beam selection / location, future channel state information / radio link quality, and the like.

Note that in the present disclosure, the AI may be interpreted as an object (also referred to as a target, data, a function, a program, or the like) having (for performing) at least one of the following characteristics:

- Estimation based on information to be observed or collected
- Selection based on information to be observed or collected
- Prediction based on information to be observed or collected

In the present disclosure, the object may be, for example, an apparatus, a device, or the like such as a terminal and a base station. The object may correspond to a program included in the apparatus.

In the present disclosure, the ML model may be interpreted as an object having (for performing) at least one of the following characteristics:

- Generating estimated value by feeding information
- Predicting estimated value by feeding information
- Identifying characteristic by feeding information
- Selecting operation by feeding information

In the present disclosure, the ML model may be interpreted as at least one of an AI model, predictive analytics, a predictive analytics model, and the like. The ML model may be derived by using at least one of regression analysis (for example, linear regression analysis, multiple regression analysis, or logistic regression analysis), a support vector machine, a random forest, a neural network, deep learning, and the like. In the present disclosure, the model may be interpreted as at least one of an encoder, a decoder, a tool, and the like.

The ML model outputs, based on input information, at least one piece of information such as an estimated value, a predicted value, selected operation, or classification.

Embodiments according to the present disclosure will be described in detail with reference to the drawings as follows. The radio communication methods according to respective embodiments may each be employed individually, or may be employed in combination.

The ML model related to UE-to-BS communication will be described in embodiments below, and thus related entities are the UE and BS, but application of respective embodiments of the present disclosure is not limited to this. For example, for communication between other entities (for example, UE-to-UE communication), a UE and a BS in embodiments described below may be interpreted as a first UE and a second UE. In other words, any of the UE, the BS, and the like in the present disclosure may be interpreted as an arbitrary UE/BS.

In the present disclosure, "A/B" and "at least one of A and B" may be interchangeably interpreted.

In the present disclosure, activate, deactivate, indicate, select, configure, update, determine, and the like may be interchangeably interpreted. In the present disclosure, "support," "control," "controllable," "operate," and "operable" may be interchangeably interpreted.

In the present disclosure, radio resource control (RRC), an RRC parameter, an RRC message, a higher layer parameter, an information element (IE), and a configuration may be interchangeably interpreted. In the present disclosure, a Medium Access Control control element (MAC Control Element (CE)), an update command, and an activation/deactivation command may be interchangeably interpreted.

In the present disclosure, a panel, a UE panel, a panel group, a beam, a beam group, a precoder, an Uplink (UL) transmission entity, a TRP, spatial relation information (SRI), a spatial relation, an SRS resource indicator (SRI), an SRS resource, a control resource set (COntrol REsource SET (CORESET)), a Physical Downlink Shared Channel (PDSCH), a codeword, a base station, a reference signal, a certain antenna port (for example, a demodulation reference signal (DMRS) port), a certain antenna port group (for example, a DMRS port group), a certain group (for example, a code division multiplexing (CDM) group, a certain reference signal group, or a CORESET group), a certain resource (for example, a certain reference signal resource), a certain resource set (for example, a certain reference signal resource set), a CORESET pool, a PUCCH group (PUCCH resource group), a spatial relation group, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, an index, an ID, an indicator, and a resource ID may be interchangeably interpreted. In the present disclosure, a sequence, a list, a set, a group, a cluster, a subset, and the like may be interchangeably interpreted.

In the present disclosure, a beam report may be interpreted as a beam measurement report, a CSI report, a CSI measurement report, a prediction beam report, a prediction CSI report, or the like, and vice versa.

In the present disclosure, a CSI-RS may be interpreted as at least one of a non-zero power (NZP) CSI-RS, a zero power (ZP) CSI-RS, and CSI interference measurement (CSI-IM), and vice versa.

In the present disclosure, a measured/reported RS may mean an RS measured/reported for a beam report.

Note that in the present disclosure, a timing, time point, time, a slot, a sub-slot, a symbol, a subframe, and the like may be interchangeably interpreted.

Note that in the present disclosure, a direction, an axis, a dimension, a polarized wave, a polarized wave component, and the like may be interchangeably interpreted.

Note that in the present disclosure, estimation, prediction, and inference may be interchangeably interpreted. In the present disclosure, "estimate," "predict," and "infer" may be interchangeably interpreted.

Note that in the present disclosure, the RS may be, for example, a CSI-RS, an SS/PBCH block (SS block (SSB)), or the like. An RS index may be a CSI-RS resource indicator (CRI), an SS/PBCH block resource indicator (SS/PBCH Block Indicator (SSBRI)), or the like.

Note that in the present disclosure, CSI feedback, CSI feedback information, a CSI report, CSI reporting, CSI transmission, CSI information, CSI, and the like may be interchangeably interpreted.

In the present disclosure, a sub-band may be interpreted as a physical resource block (PRB), a subcarrier, an arbitrary frequency resource unit, or the like, and vice versa.

(Radio Communication Method)

A (specific) reference signal described in each embodiment of the present disclosure may be at least one of a demodulation reference signal (DMRS), a phase tracking reference signal (PTRS), and another arbitrary reference signal described in the present disclosure. In the present disclosure, the reference signal, the DMRS, the PTRS, and another arbitrary reference signal described in the present disclosure may be interchangeably interpreted.

The reference signal described in each embodiment of the present disclosure may be a UL reference signal (reference signal for a UL channel), or may be a DL reference signal (reference signal for a DL channel).

Each embodiment of the present disclosure below describes the reference signal by mainly using a DMRS as an example thereof, but the reference signal is not limited to the DMRS, and an arbitrary reference signal is applicable.

In the present disclosure, allocation, mapping, transmission, and reception of a reference signal may be interchangeably interpreted.

<First Embodiment>

A first embodiment describes a method for determining mapping of a reference signal.

A UE may determine mapping of the reference signal in accordance with at least one of option 1-1 to option 1-3 below.

<<Option 1-1>>

The UE may determine/select one reference signal configuration from a plurality of configurations related to the reference signal.

The determination/selection of the one reference signal configuration may be performed based on a specific condition / indication from a base station. The specific condition / indication from the base station will be described in detail below.

For example, the UE may determine/select, from a plurality of reference signal configurations (reference signal configuration X and reference signal configuration Y), one reference signal configuration (reference signal configuration X or reference signal configuration Y) in at least one of transmission of a UL channel (for example, a PUSCH) and reception of a DL channel (for example, a PDSCH).

Note that the number of the plurality of reference signal configurations may be two as in the above description, or may be two or more. In the present disclosure, reference signal configuration X and reference signal configuration Y may be interpreted as a first reference signal configuration and a second reference signal configuration, respectively, and vice versa.

The UE may determine that one reference signal configuration of the plurality of reference signal configurations is a default reference signal configuration.

In the present disclosure, the default reference signal configuration may mean a configuration selected/-determined when the UE does not receive, from the base station (network), a signal for specifying/indicating the selection/determination.

The plurality of reference signal configurations (reference signal configuration X and reference signal configuration Y) may correspond to, for example, at least one of an uplink configuration of a demodulation reference signal (DMRS) (for example, a higher layer parameter "DMRS-UplinkConfig") and a downlink configuration of a demodulation reference signal (DMRS) (for example, a higher layer parameter "DMRS-Downlink-Config").

The plurality of reference signal configurations may be a configuration including at least one of the following elements/parameters:

- Reference signal (for example, DMRS) configuration type
- Number of code division multiplexing (CDM) groups (not used for data)
- Number of symbols of additional DMRS
- Maximum number of OFDM symbols for front load (front loaded) DMRS
- Frequency resource (for example, sub-carrier) for transmitting reference signal
- Symbol location of first DMRS (for example, start DMRS) in case of specific mapping type (for example, mapping type A)
- Frequency density / time density of PTRS
- Frequency (for example, sub-carrier) offset of PTRS
- Power per resource element (Energy per resource element (EPRE)) ratio between PTRS and DL channel (for example, PDSCH)
- Transmission power boosting factor of PTRS

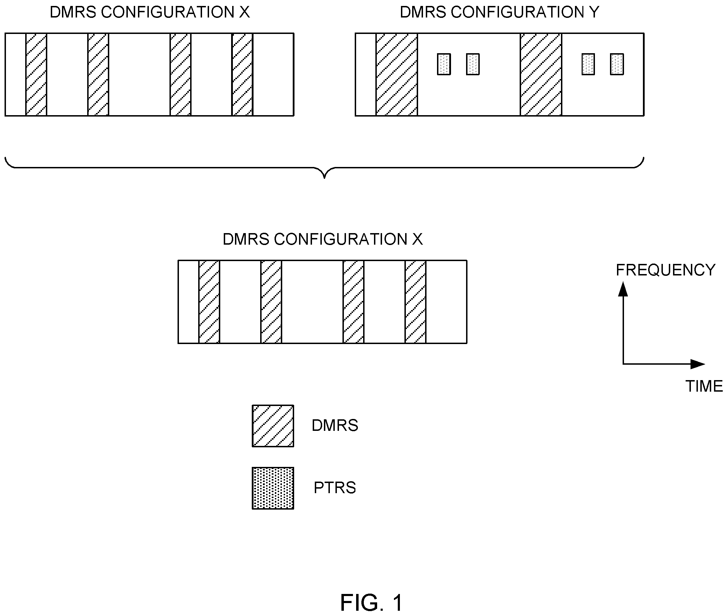

FIG. 1 is a diagram to show an example of the reference signal configuration according to option 1-1 in the first embodiment. In FIG. 1, the UE selects/determines a configuration related to one reference signal from a plurality of configurations related to the reference signal (DMRS configuration X and DMRS configuration Y), based on the specific condition / indication from the base station.

The example shown in FIG. 1 shows a case where DMRS configuration X does not include a PTRS configuration (element/parameter related to a PTRS, for example, at least one of frequency density / time density of the PTRS, frequency (for example, sub-carrier) offset of the PTRS, EPRE ratio between the PTRS and a DL channel (for example, a PDSCH), and a transmission power boosting factor of the PTRS) and where DMRS configuration Y includes at least one PTRS configuration. Note that whether the plurality of reference signal configurations include the PTRS configuration may be arbitrary.

In the example shown in FIG. 1, the UE selects/determines one DMRS configuration (DMRS configuration X), based on the specific condition / indication from the base station.

<<Option 1-2>>

The UE may change/update part/all of configuration by one reference signal configuration, based on a specific condition / indication from the base station.

For example, the UE may change/update a reference signal mapping type of an already selected/configured reference signal configuration (DMRS configuration), and may apply the mapping type to at least one of transmission of a UL channel (for example, a PUSCH) and reception of a DL channel (for example, a PDSCH).

For example, the changed/updated configuration may be a configuration including at least one of the following elements/parameters:

- Reference signal (for example, DMRS) configuration type
- Number of code division multiplexing (CDM) groups (not used for data)
- Number of symbols of additional DMRS
- Maximum number of OFDM symbols for front load (front loaded) DMRS
- Frequency resource (for example, sub-carrier) for transmitting reference signal
- Symbol location of first DMRS (for example, start DMRS) in case of specific mapping type (for example, mapping type A)
- Frequency density / time density of PTRS
- Frequency (for example, sub-carrier) offset of PTRS
- EPRE ratio between PTRS and DL channel (for example, PDSCH)
- Transmission power boosting factor of PTRS

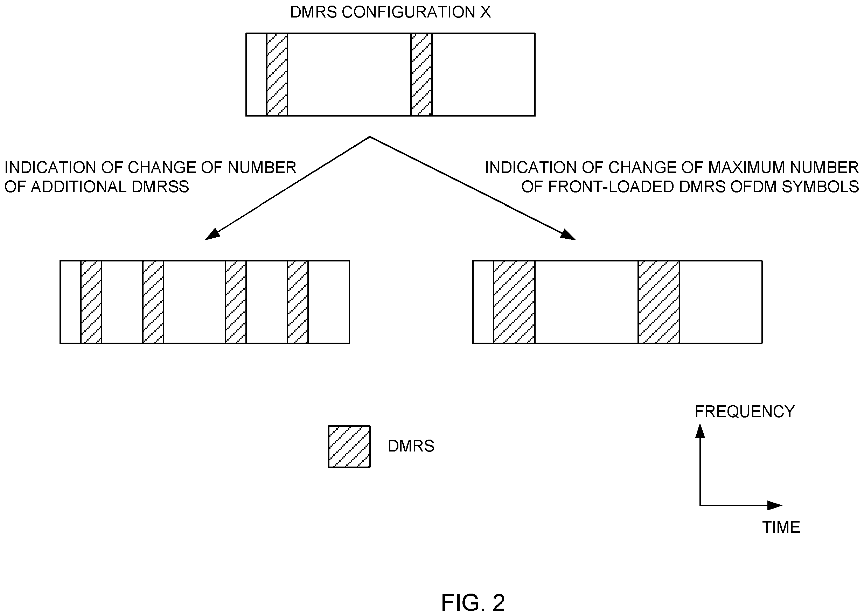

FIG. 2 is a diagram to show an example of the reference signal configuration according to option 1-2 in the first embodiment. In FIG. 2, based on the specific condition / indication from the base station, the UE changes, in an already configured/selected reference signal configuration (DMRS configuration X), part/all of the reference signal configuration.

In the example shown in FIG. 2, for example, the UE receives, from the base station, information for indicating change of the number of additional DMRS symbols. In this case, the UE changes, based on the information, the number of DMRS (additional DMRS) symbols.

In the example shown in FIG. 2, for example, the UE receives, from the base station, information for indicating change of a maximum number of OFDM symbols for a front loaded DMRS. In this case, the UE changes, based on the information, the number of DMRS (additional DMRS) symbols.

<<Option 1-3>>

Option 1-1 and option 1-2 mentioned above may be applied in combination.

For example, the UE may first select/determine, by using option 1-1 above, one reference signal configuration for a certain channel. Subsequently, the UE may change/update, by using option 1-2 above, the reference signal configuration for the channel.

For example, the UE may first select/determine, by using option 1-1 above, one reference signal configuration for a certain channel (first channel). Subsequently, the UE may change/update, by using option 1-2 above, the reference signal configuration for the first channel. Furthermore, the UE may select/determine, by using option 1-1 above, one reference signal configuration for a channel (second channel) different from the channel. Subsequently, the UE may change/update, by using option 1-2 above, the reference signal configuration for the second channel.

Thus, when selection/determination/change/update of reference signal configurations is performed for a plurality of different channels, the UE may ignore configuration/change for a first channel.

Thus, when selection/determination/change/update of reference signal configurations is performed for a plurality of different channels, the UE may maintain configuration/change for a first channel.

The above specific condition / indication from the base station will be described below.

The UE may receive, from the base station (network), indication information related to reference signal mapping.

The indication information related to reference signal mapping may be received based on a method described in a third embodiment below.

The indication information related to reference signal mapping may be information related to a reference signal described in a second embodiment below.

In at least one of transmission of a UL channel (for example, a PUSCH) and reception of a DL channel (for example, a PDSCH), the UE may judge/determine reference signal mapping, based on whether the specific condition is satisfied.

The specific condition may be determined based on a specific rule. The specific condition may be determined based on information received in accordance with a method described in the third embodiment below.

In at least one of transmission of a UL channel (for example, a PUSCH) and reception of a DL channel (for example, a PDSCH), the UE may perform at least one of determination of reference signal mapping to be applied and determination of whether to apply received information related to a reference signal, based on whether the specific condition is satisfied.

For example, when the specific condition is satisfied, the UE may determine application of a specific reference signal configuration. When the specific condition is satisfied, the UE may determine application of received information related to a reference signal.

On the other hand, when the specific condition is not satisfied, the UE may perform application of a reference signal configuration, based on a specific method. The specific method may be a reference signal configuration method defined by an existing specification (for example, Rel. 15/16). The specific method may be a default configuration in option 1-1 above. The specific method may be a (default) configuration to which change (indication) in option 1-2 above is not applied.

The specific condition may be at least one of the following conditions:

- Whether bundling of reference signal (for example, DMRS bundling) is applied
- Whether at least one of transmission of UL channel (for example, PUSCH) and reception of DL channel (for example, PDSCH) is performed over plurality of time resources (for example, slots)
- Whether resource (for example, RE) for receiving configured CSI-RS and reference signal mapping resource based on received information overlap each other
- Modulation order (modulation degree) (for UL/DL channel)
- Number of layers (for UL/DL channel)
- Number of DMRS ports (for UL/DL channel)
- DCI format for allocating (scheduling/activating) UL channel (for example, PUSCH) / DL channel (for example, PDSCH)
- Whether specific UL channel / DL channel or not
- RNTI (Radio Network Temporary Identifier) for scrambling CRC (Cyclic Redundancy Check) of DCI for scheduling/activating UL channel (for example, PUSCH) / DL channel (for example, PDSCH)
- For each configured grant configuration index (ConfiguredGrantConfigIndex)
- Whether DCI for allocating (scheduling/activating) UL channel (for example, PUSCH) / DL channel (for example, PDSCH) includes information related to reference signal
- State of UE corresponding to learning state or state after learning
- Velocity of UE / velocity direction of UE

With determination based on whether DMRS bundling is applied, channel estimation accuracy is enhanced/improved by DMRS bundling, and thus it is possible to maintain the estimation accuracy even if the number of DMRS symbols is reduced.

Note that in the present disclosure, the "DMRS bundling" may mean that a (for example, one) DMRS is transmitted while equal power and phase continuity are maintained in a plurality of time resources (for example, slots). In the present disclosure, the DMRS bundling, cross-slot channel estimation, cross-repetition channel estimation, and use of a common DMRS in a plurality of time resources may be interchangeably interpreted.

The UL channel / DL channel over the plurality of time resources (for example, slots) may be, for example, at least one of repetition transmission (repetition) and a transport block (TB) process over a plurality of slots (TB processing over multi-slots (TBoMS)).

The overlap between the resource (for example, RE) for receiving the configured CSI-RS and the reference signal mapping resource based on the received information will be described in detail in a fifth embodiment below.

A specific DCI format (for example, DCI format 0_0/1_0) for allocating (scheduling/activating) a UL channel (for example, a PUSCH) / DL channel (for example, a PDSCH) may not include information related to a reference signal (information related to reference signal mapping). According to this, the specific DCI format can prevent application of dynamic mapping of a reference signal.

The above specific UL channel / DL channel may be, for example, at least one of a PUSCH with message A for random access procedure of a specific type (for example, type 2) (for example, message A), a configured grant (type 1/2) PUSCH, a semi-persistent scheduling (SPS) PDSCH, and a PUSCH/PDSCH scheduled/activated by DCI.

The above RNTI may be, for example, at least one of a Cell (C-) RNTI, a Configured Scheduling (CS-) RNTI, a Modulation Coding Scheme Cell (MCS-C-) RNTI, and another arbitrary RNTI.

When information related to a reference signal corresponding to each configured grant configuration index (ConfiguredGrantConfigIndex) is applied, DCI / MAC CE including the information related to the reference signal may include an index of a configured grant (configured grant configuration index) to be applied.

A case where the DCI for allocating (scheduling/activating) the UL channel (for example, PUSCH) / DL channel (for example, PDSCH) includes the information related to the reference signal will be described in detail in a fourth embodiment below.

The velocity of the UE / velocity direction of the UE may be based on, for example, whether identification of the UE being included in a specific moving object (for example, a vehicle, a train) or the like is performed. The velocity of the UE / velocity direction of the UE / identification may be determined by the UE (based on, for example, a sensor included by the UE), or may be determined by notification, from the base station, of information related to the velocity of the UE / velocity direction of the UE / identification.

The specific condition may be a condition obtained by combining at least two of the above plurality of examples of the specific condition with each other.

For example, when the specific condition is satisfied, the UE may apply information related to a reference signal included in DCI / MAC CE.

When the specific condition is satisfied, the UE may change/update, based on the information related to the reference signal included in the DCI / MAC CE, part/all of configuration by one reference signal configuration.

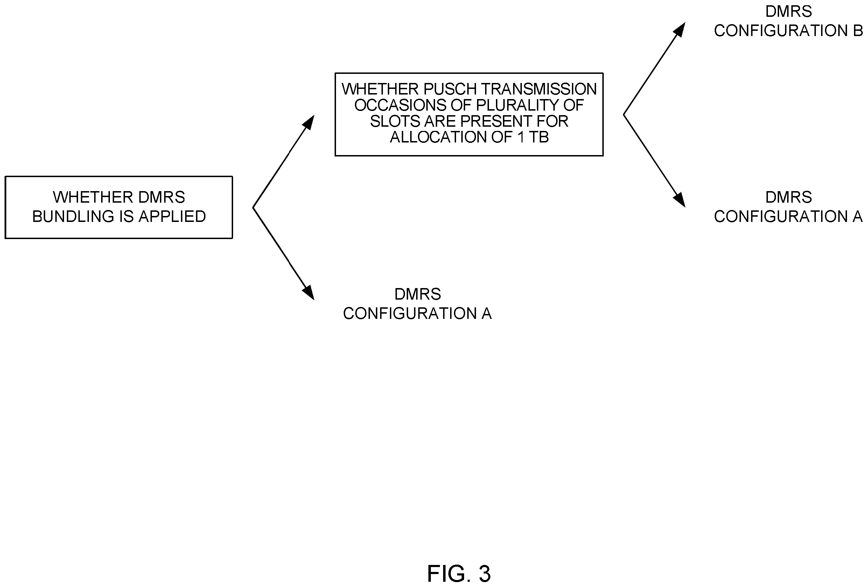

FIG. 3 is a diagram to show an example of the reference signal-related condition according to the first embodiment. In the example shown in FIG. 3, the UE performs determination based on whether DMRS bundling is applied.

In FIG. 3, when determining that the DMRS bundling is applied, the UE determines whether PUSCH transmission occasions of a plurality of slots are configured/indicated for allocation of 1 TB. When determining that the DMRS bundling is not applied, the UE determines that DMRS configuration A is applied.

In FIG. 3, when determining that the PUSCH transmission occasions of the plurality of slots are configured/indicated for the allocation of 1 TB, the UE determines that DMRS configuration B is applied. When determining that the PUSCH transmission occasions of the plurality of slots are not configured/indicated for the allocation of 1 TB, the UE determines that DMRS configuration A is applied.

Note that these DMRS configurations A and B are just examples, and configuration names and the number of configured configurations are not limited to this.

According to the first embodiment above, it is possible to appropriately perform selection/determination/change/update of reference signal mapping.

<Second Embodiment>

A second embodiment describes information related to a reference signal.

A UE may receive the information related to the reference signal from a base station (network).

The information related to the reference signal may include an index of a reference signal configuration to be applied to reference signal mapping.

The index of the reference signal configuration to be applied to the reference signal mapping may be an index for indicating one reference signal configuration to be applied, from among a plurality of configured reference signal configurations.

When not receiving the information related to the reference signal including the index of the reference signal configuration, the UE may apply a default reference signal configuration. The default reference signal configuration may be determined by a specific rule, or may be determined based on RRC signaling configuration.

The information related to the reference signal may include a parameter for reference signal configuration. The parameter may be at least one of the following parameters:

- Reference signal (for example, DMRS) configuration type
- Number of code division multiplexing (CDM) groups (not used for data)
- Number of symbols of additional DMRS
- Maximum number of OFDM symbols for front load (front loaded) DMRS
- Frequency resource (for example, sub-carrier) for transmitting reference signal
- Symbol location of first DMRS (for example, start DMRS) in case of specific mapping type (for example, mapping type A)
- Frequency density / time density of PTRS
- Frequency (for example, sub-carrier) offset of PTRS
- Power per resource element (Energy per resource element (EPRE)) ratio between PTRS and DL channel (for example, PDSCH)
- Transmission power boosting factor of PTRS
- Number of DMRS combs at RE level (for each RE) / resource block (RB) level (for each RB)
- Number of samples / sampling interval / sampling offset in sampling of symbols for reference signal
- Number of samples / sampling interval / sampling offset in sampling of sub-carriers for reference signal
- Index associated with number of samples / sampling interval / sampling offset

The sampling offset may be an offset value for determining a symbol in which the sampling is started. The sampling offset may be an offset value for determining a sub-carrier in which the sampling is started.

Note that in the present disclosure, sampling of a reference signal may mean determination/change of a symbol/sub-carrier to which the reference signal is mapped / not mapped.

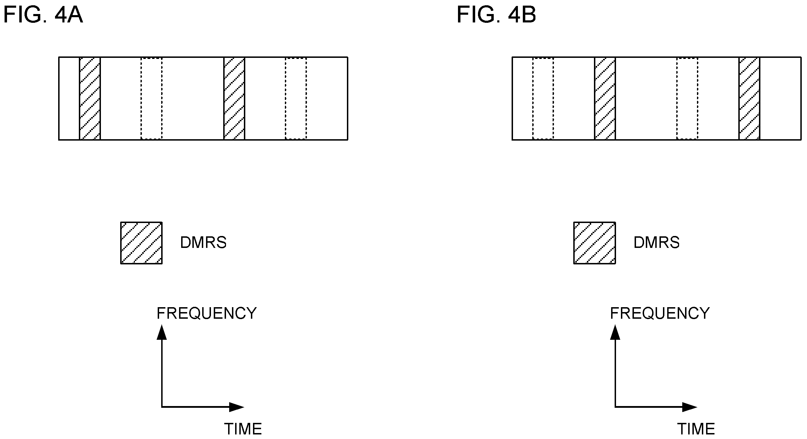

FIGS. 4A and 4B are diagrams to show examples of the sampling of the reference signal. FIG. 4A shows a case where sampling interval = 2 and sampling offset = 0. FIG. 4B shows a case where sampling interval = 2 and sampling offset = 1.

In the examples shown in FIGS. 4A and 4B, the UE determines DMRS symbols, based on indicated sampling intervals and offsets.

The information related to the reference signal may include information related to a time resource to which the reference signal is not mapped. The information related to a time resource to which the reference signal is not mapped may be determined in accordance with at least one of option 2-1-1 to option 2-1-3 below.

<<Option 2-1-1>>

The information related to a time resource to which the reference signal is not mapped may be information for indicating a symbol to which the reference signal is not mapped.

The information for indicating a symbol to which the reference signal is not mapped may be a bitmap.

The UE may determine, based on the information for indicating a symbol to which the reference signal is not mapped (bitmap), a symbol to which the reference signal is not mapped.

The UE may assume (expect) / determine that the reference signal is not mapped to a (OFDM) symbol in which a value of an indicated bitmap corresponds to a bit of a first value (for example, 1 (or which may be 0)).

Each bit (value) of the bitmap may correspond to one or more symbols. Each bit (value) of the bitmap may correspond to X (X is an integer configured such that $X \geq 1$) symbols. This X may be predefined by a specification, may be determined based on a specific rule, may be configured by RRC signaling, or may be determined based on reporting of UE capability information.

A length of the bitmap (bit length) may be predefined by a specification, may be determined based on a specific rule, may be configured by RRC signaling, or may be determined based on reporting of UE capability information.

The length of the bitmap may be determined based on the number of symbols for the reference signal in N slots (N is an integer, for example, N = 1) / repetition transmission (repetition). For example, the length of the bitmap may be the number of symbols for the reference signal in N slots / repetition transmission.

The length of the bitmap may be determined based on a value obtained by adding M (M is an integer, for example, M = 1) to the number of symbols of an additional reference signal (for example, an additional DMRS). For example, the length of the bitmap may be a value obtained by adding M to the number of symbols of the additional reference signal (for example, the additional DMRS).

The length of the bitmap may be determined based on the number of allocation symbols for a UL channel (for example, a PUSCH) / DL channel (for example, a PDSCH). For example, the length of the bitmap may be the number of allocation symbols for the UL channel (for example, the PUSCH) / DL channel (for example, the PDSCH).

When repetition transmission / TBoMS is applied to the UL channel (for example, the PUSCH) / DL channel (for example, the PDSCH), the length of the bitmap may be determined based on a value obtained by multiplying, by the number of repetitions / number of allocation slots, at least one of the number of symbols for the reference signal in N slots / repetition transmission, a value obtained by adding M to the number of symbols for the additional reference signal, and the number of allocation symbols for the UL channel / DL channel. For example, when repetition transmission / TBoMS is applied to the UL channel (for example, the PUSCH) / DL channel (for example, the PDSCH), the length of the bitmap may be a value obtained by multiplying, by the number of repetitions / number of allocation slots, at least one of the number of symbols for the reference signal in N slots / repetition transmission, a value obtained by adding M to the number of symbols for the additional reference signal, and the number of allocation symbols for the UL channel / DL channel.

When repetition transmission / TBoMS is applied to the UL channel (for example, the PUSCH) / DL channel (for example, the PDSCH), the length of the bitmap may be determined based on at least one of the number of symbols for the reference signal in N slots / repetition transmission, a value obtained by adding M to the number of symbols for the additional reference signal, and the number of allocation symbols for the UL channel / DL channel in each slot. For example, when repetition transmission / TBoMS is applied to the UL channel (for example, the PUSCH) / DL channel (for example, the PDSCH), the length of the bitmap may be at least one of the number of symbols for the reference signal in N slots / repetition transmission, a value obtained by adding M to the number of symbols for the additional reference signal, and the number of allocation symbols for the UL channel / DL channel in each slot.

The length of the bitmap may be determined based on the number of repetitions in a slot in which allocation based on an RRC parameter is possible. For example, the length of the bitmap may be the number of repetitions in a slot in which allocation based on the RRC parameter is possible.

When each bit (value) of the bitmap corresponds to a plurality of (X) symbols, the length of the bitmap may be determined based on a value obtained by rounding up a value obtained by multiplying, by 1/X, at least one of the number of symbols for the reference signal in N slots / repetition transmission, a value obtained by adding M to the number of symbols for the additional reference signal, and the number of allocation symbols for the UL channel / DL channel. For example, when each bit (value) of the bitmap corresponds to a plurality of (X) symbols, the length of the bitmap may be a value obtained by rounding up a value obtained by multiplying, by 1/X, at least one of the number of symbols for the reference signal in N slots / repetition transmission, a value obtained by adding M to the number of symbols for the additional reference signal, and the number of allocation symbols for the UL channel / DL channel.

The UE may receive, by using DCI / MAC CE, an index associated with the bitmap, based on RRC signaling / specific rule.

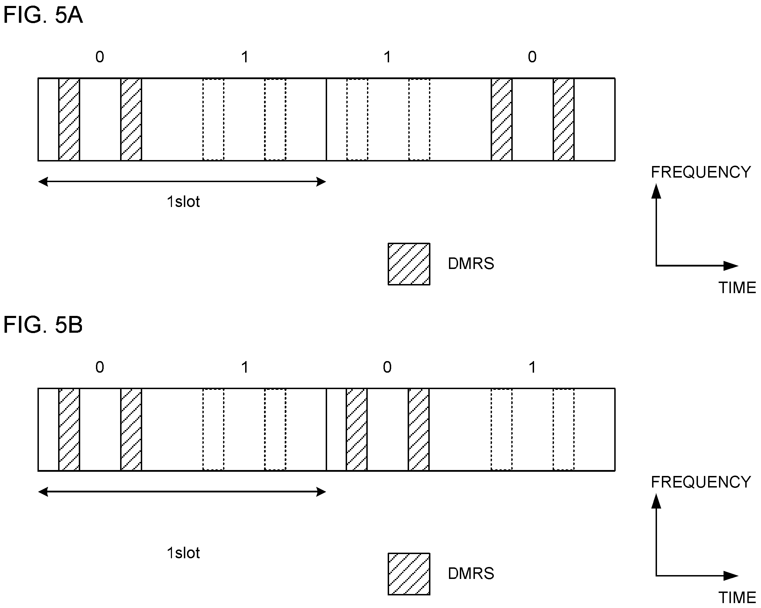

FIGS. 5A and 5B are diagrams to show examples of mapping of the reference signal according to the second embodiment.

In an example shown in FIG. 5A, the bitmap of a bit length equal to the number of symbols of the reference signal (DMRS) in 1 slot is indicated for the UE. The example shown in FIG. 5A shows a case where the number of repetition transmissions is 2 and where the number of symbols to which each bit of the bitmap corresponds (X described above) is 2.

As shown in FIG. 5A, "0110" is indicated for the UE as the bitmap, the UE determines that the DMRS is mapped to a DMRS OFDM symbol corresponding to 0 and that the DMRS is not mapped to a DMRS OFDM symbol corresponding to 1.

An example shown in FIG. 5B shows a case where the bitmap indicated for the UE is applied to each slot. The example shown in FIG. 5B shows a case where the number of repetition transmissions is 2 and where the number of symbols to which each bit of the bitmap corresponds (X described above) is 2, as in FIG. 5A.

As shown in FIG. 5B, "01" is indicated for the UE as the bitmap, the UE determines, in each slot, that the DMRS is mapped to a DMRS OFDM symbol corresponding to 0 and that the DMRS is not mapped to a DMRS OFDM symbol corresponding to 1, as in FIG. 5A.

<<Option 2-1-2>>

The information related to a time resource to which the reference signal is not mapped may be information for indicating a slot to which the reference signal is not mapped.

The information for indicating a slot to which the reference signal is not mapped may be a bitmap.

The UE may determine, based on the information for indicating a slot to which the reference signal is not mapped (bitmap), a slot to which the reference signal is not mapped.

The UE may assume (expect) / determine that the reference signal is not mapped to a slot in which a value of an indicated bitmap corresponds to a bit of a first value (for example, 1 (or which may be 0)).

Each bit (value) of the bitmap may correspond to one or more slots. Each bit (value) of the bitmap may correspond to X (X is an integer configured such that $X \geq 1$) slots. This X may be predefined by a specification, may be determined based on a specific rule, may be configured by RRC signaling, or may be determined based on reporting of UE capability information.

A length of the bitmap (bit length) may be predefined by a specification, may be determined based on a specific rule, may be configured by RRC signaling, or may be determined based on reporting of UE capability information.

The length of the bitmap may be determined based on the number of repetitions when repetition transmission is applied to a UL channel (for example, a PUSCH) / DL channel (for example, a PDSCH). For example, the length of the bitmap may be the number of repetitions when repetition transmission is applied to the UL channel (for example, the PUSCH) / DL channel (for example, the PDSCH).

The length of the bitmap may be determined based on the number of allocation slots when TBoMS is applied to the UL channel (for example, the PUSCH) / DL channel (for example, the PDSCH). For example, the length of the bitmap may be the number of allocation slots when TBoMS is applied to the UL channel (for example, the PUSCH) / DL channel (for example, the PDSCH).

The length of the bitmap may be determined based on the number of repetitions in a slot in which allocation based on an RRC parameter is possible. For example, the length of the bitmap may be the number of repetitions in a slot in which allocation based on the RRC parameter is possible.

The length of the bitmap may be determined based on a maximum number of repetitions / number of allocation slots configured by RRC signaling. For example, the length of the bitmap may be the maximum number of repetitions / number of allocation slots configured by the RRC signaling. In this case, the length of the bitmap can be determined without depending on contents of DCI.

When each bit (value) of the bitmap corresponds to a plurality of (X) slots, the length of the bitmap may be determined based on a value obtained by rounding up a value obtained by multiplying, by 1/X, at least one of the number of repetitions, the number of allocation slots, the number of repetitions in a slot in which allocation based on an RRC parameter is possible, and a maximum number of repetitions / number of allocation slots configured by RRC signaling. For example, when each bit (value) of the bitmap corresponds to a plurality of (X) slots, the length of the bitmap may be a value obtained by rounding up a value obtained by multiplying, by 1/X, at least one of the number of repetitions, the number of allocation slots, the number of repetitions in a slot in which allocation based on an RRC parameter is possible, and a maximum number of repetitions / number of allocation slots configured by RRC signaling.

The UE may receive, by using DCI / MAC CE, an index associated with the bitmap, based on RRC signaling / specific rule.

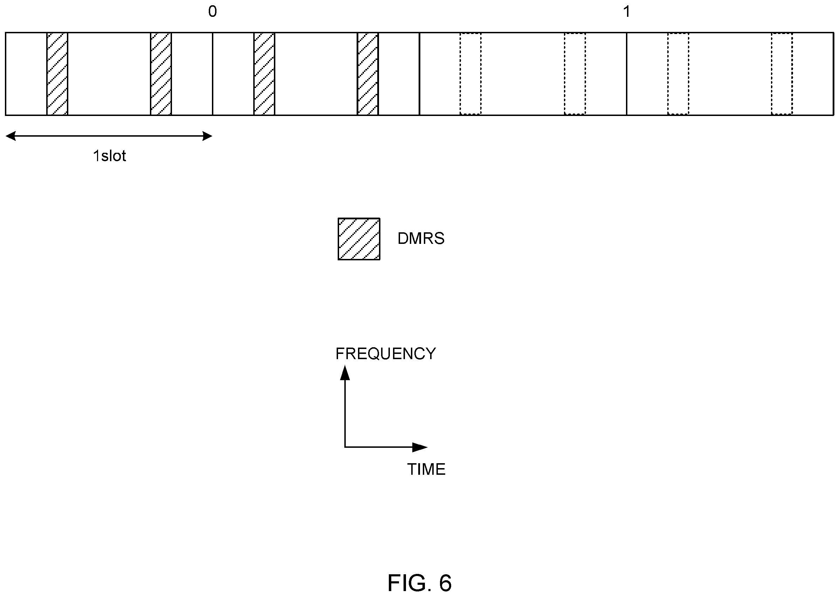

FIG. 6 is a diagram to show another example of the mapping of the reference signal according to the second embodiment.

The example shown in FIG. 6 shows a case where the number of repetition transmissions is 4 and where the number of slots to which each bit of the bitmap corresponds (X described above) is 2.

As shown in FIG. 6, "01" is indicated for the UE as the bitmap, the UE determines that the DMRS is mapped to a slot corresponding to 0 and that the DMRS is not mapped to a slot corresponding to 1. In the example in FIG. 6, the DMRS is mapped to the first 2 slots, and the DMRS is not mapped to 2 subsequent slots.

<<Option 2-1-3>>

Option 2-1-1 and option 2-1-2 described above may be applied in combination.

According to option 2-1-1 to option 2-1-3 above, it is possible to appropriately determine a time resource in which a reference signal is transmitted.

The information related to the reference signal may include information related to a frequency resource to which the reference signal is not mapped.

The information related to a frequency resource to which the reference signal is not mapped may be information for indicating a sub-carrier to which the reference signal is not mapped.

The information related to a frequency resource (for example, a sub-carrier) to which the reference signal is not mapped may be determined in accordance with at least one of option 2-2-1 to option 2-2-3 below.

<<Option 2-2-1>>

The information related to a sub-carrier to which the reference signal is not mapped may be information based on information for indicating (limiting) a value of a sequence corresponding to a frequency resource of the reference signal.

The sequence may be an orthogonal cover code (OCC) sequence (for example, at least one of $w_f$ (k') and wt (k')).

A value of the sequence (for example, a value indicated (limited) as k') may be a first value (for example, "0") or a second value (for example, "1").

When the value of the sequence (k') is limited to one value (first value or second value), the UE may determine mapping of the reference signal, based on an equation related to a sequence of the reference signal given by Equation 1 below.
[Math. 1]

$$(\text{Equation 1})$$
$$\alpha_{k,l}^{(p,\mu)} = \beta_{\text{PDSCH}}^{\text{DMRS}} w_f(k') w_t(l') r(n)$$
$$k = \begin{cases} 4n + 2k' + \Delta & \text{Configuration type 1} \\ 6n + k' + \Delta & \text{Configuration type 2} \end{cases}$$
$$k' = 0, 1$$
$$l' = \bar{l} + l'$$
$$n = 0, 1, \dots$$

Here, $\alpha_{k,l}^{(p,\mu)}$ in Equation 1 above is a complex value of RE(k,l) corresponding to antenna port p and subcarrier spacing configuration $\mu$. $\beta_{\text{PDSCH}}^{\text{DMRS}}$ is a scaling factor of the reference signal, $w_f$ is an OCC sequence in a frequency direction, wt is an OCC sequence in a time direction, and r is a sequence of the reference signal. k is a sub-carrier index, 1 is a symbol index, and $\Delta$ indicates an offset value.

As compared with an equation defined by an existing specification (Rel. 16 (or earlier versions)), Equation 1 above is different from the equation in that a variable of sequence r is only n. Equation 1 above is used for mapping of the reference signal, thereby allowing the value of the sequence to be used as a consecutive value even when k' is limited.

When the value of the sequence (k') is limited to one value (first value or second value), the UE may determine mapping of the reference signal, based on an equation related to a sequence of the reference signal given by Equation 2 below.
[Math. 2]

$$(\text{Equation 2})$$
$$\alpha_{k,l}^{(p,\mu)} = \beta_{\text{PDSCH}}^{\text{DMRS}} w_f(k') w_t(l') r(2n + k')$$
$$k = \begin{cases} 4n + 2k' + \Delta & \text{Configuration type 1} \\ 6n + k' + \Delta & \text{Configuration type 2} \end{cases}$$
$$k' = 0, 1$$
$$l' = \bar{l} + l'$$
$$n = 0, 1, \dots$$

Equation 2 above is similar to an equation related to mapping of a reference signal (PDSCH DMRS) and defined by an existing specification (Rel. 16 (or earlier versions)). Respective parameters in Equation 2 are similar to those in Equation 1.

Note that Equation 1 and Equation 2 above may be appropriately applied not only to a DL channel (for example, a PDSCH), but also to a UL channel (for example, a PUSCH). For example, when Equation 1 and Equation 2 above are applied to the PUSCH, the application may be performed by appropriately interpreting each parameter for the PDSCH as that for the PUSCH.

When a possible value of the value of the sequence (k') varies between UEs, the UE may assume that the reference signal is not multiplexed between the UEs.

The UE may determine a possible value of the value of the sequence (k'), based on a DMRS port.

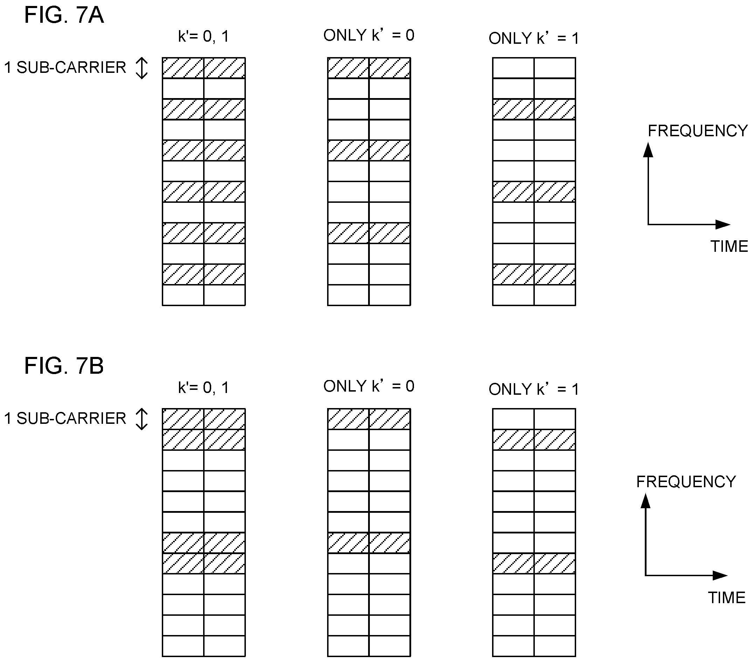

FIGS. 7A and 7B are diagrams to show examples of mapping of the reference signal according to option 2-2-1 in the second embodiment. When receiving information based on information for indicating (limiting) a value of a sequence corresponding to a frequency resource of the reference signal, the UE performs mapping of the reference signal in such a manner as that described in FIGS. 7A and 7B.

For example, mapping of the reference signal described in FIG. 7A corresponds to a case of configuration type 1 and offset ($\Delta$) = 0 in Equation 1 above. The UE determines mapping of the reference signal corresponding to respective ones of a case where a value of k' is limited to 0 and a case where a value of k' is limited to 1.

For example, mapping of the reference signal described in FIG. 7B corresponds to a case of configuration type 2 and offset ($\Delta$) = 0 in Equation 2 above. The UE determines mapping of the reference signal corresponding to respective ones of a case where a value of k' is limited to 0 and a case where a value of k' is limited to 1.

<<Option 2-2-2>>

The information related to a frequency resource to which the reference signal is not mapped may be information for indicating a sub-carrier to which the reference signal is mapped / not mapped.

The information for indicating a sub-carrier to which the reference signal is mapped / not mapped may be a bitmap.

The UE may determine, based on the information for indicating a sub-carrier to which the reference signal is mapped / not mapped (bitmap), a sub-carrier to which the reference signal is mapped / not mapped.

The UE may assume (expect) / determine that the reference signal is not mapped to a sub-carrier in which a value of an indicated bitmap corresponds to a bit of a first value (for example, 0 (or which may be 1)).

Each bit (value) of the bitmap may correspond to one or more sub-carriers. Each bit (value) of the bitmap may correspond to X (X is an integer configured such that X $\geq$ 1) sub-carriers. This X may be predefined by a specification, may be determined based on a specific rule, may be configured by RRC signaling, or may be determined based on reporting of UE capability information.

Each bit (value) of the bitmap may correspond to variable n in at least one of Equation 1 and Equation 2 described above.

A length of the bitmap may be predefined by a specification, may be determined based on a specific rule, may be configured by RRC signaling, or may be determined based on reporting of UE capability information.

For example, the length of the bitmap may be determined based on a maximum number of sub-carriers for the reference signal that can be mapped in Y (Y is an integer greater than or equal to 1) RBs / REs. For example, the length of the bitmap may be determined based on a maximum number of sub-carriers for the reference signal that can be mapped in Y (Y is an integer greater than or equal to 1) RBs / REs. For example, the length of the bitmap may be a maximum number of sub-carriers for the reference signal that can be mapped in Y RBs / REs. This Y may be predefined by a specification, may be determined based on a specific rule, may be configured by RRC signaling, or may be determined based on reporting of UE capability information.

When each bit (value) of the bitmap corresponds to a plurality of (X) sub-carriers, the length of the bitmap may be determined based on a value obtained by rounding up a value obtained by multiplying, by 1/X, at least one of the number of allocated sub-carriers and a maximum number of sub-carriers for the reference signal that can be mapped in Y (Y is an integer greater than or equal to 1) RBs / REs, a number predefined by a specification, a number determined based on a specific rule, a number configured by RRC signaling, and a number based on reporting of UE capability information. For example, when each bit (value) of the bitmap corresponds to a plurality of (X) sub-carriers, the length of the bitmap may be a value obtained by rounding up a value obtained by multiplying, by 1/X, at least one of the number of allocated sub-carriers and a maximum number of sub-carriers for the reference signal that can be mapped in Y (Y is an integer greater than or equal to 1) RBs / REs, a number predefined by a specification, a number determined based on a specific rule, a number configured by RRC signaling, and a number based on reporting of UE capability information.

The UE may receive, by using DCI / MAC CE, an index associated with the bitmap, based on RRC signaling / specific rule.

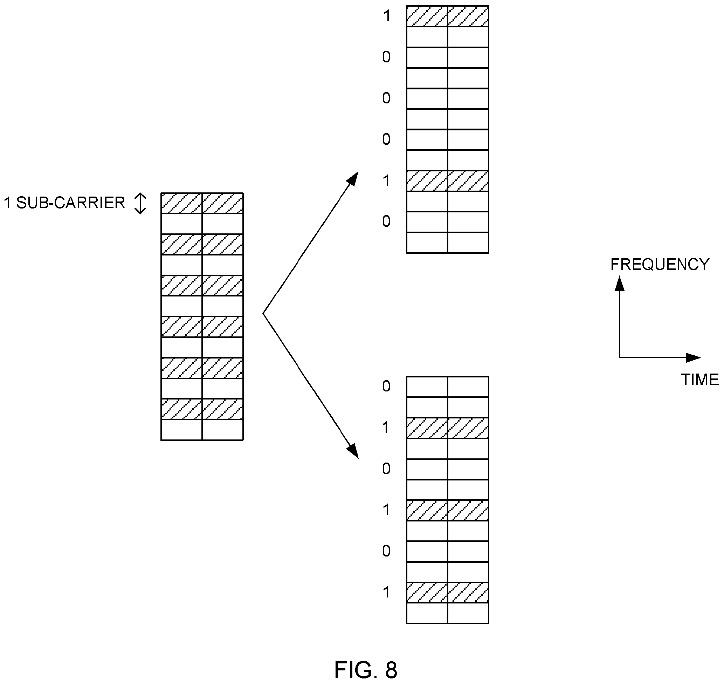

FIG. 8 is a diagram to show an example of mapping of the reference signal according to option 2-2-2 in the second embodiment. FIG. 8 shows a case where the length of the bitmap is the number of sub-carriers for the reference signal (here, 6) mapped to 1 RB (12 sub-carriers).

The example shown in FIG. 8 shows a case where, as a value of the bitmap, "101010" or "010001" is notified to the UE. The UE determines that the reference signal is mapped to a sub-carrier corresponding to "1" and that the reference signal is not mapped to a sub-carrier corresponding to "0."

Note that the example shown in FIG. 8 describes a case where the most significant bit (MSB) of the bitmap corresponds to the lowest sub-carrier, but the least significant bit (LSB) of the bitmap may correspond to the lowest sub-carrier.

<<Option 2-2-3>>

Option 2-2-1 and option 2-2-2 described above may be applied in combination.

According to option 2-2-1 to option 2-2-3 above, it is possible to appropriately determine a frequency resource in which a reference signal is transmitted.

The UE may determine a sequence of a frequency direction (frequency domain) (for example, an OCC sequence) related to mapping of the reference signal.

The UE may determine the sequence of the frequency direction related to mapping of the reference signal, based on at least one of option 2-3-1 and option 2-3-2 below.

Whether option 2-3-1/2-3-2 is applied and which of option 2-3-1 or option 2-3-2 is applied may be determined by the UE in accordance with a specific rule, may be configured for the UE by RRC signaling, or may be determined by the UE, based on information related to a reference signal included in DCI / MAC CE.

When applying option 2-3-1/2-3-2, the UE may assume that multiplexing between at least one of another UE that does not apply option 2-3-1/2-3-2 (same option) and another UE that applies an option different from an option applied by the UE, and the UE for the reference signal is not performed.

<<Option 2-3-1>>

The UE may assume/determine that a value of the sequence of the frequency direction (for example, the OCC sequence) (for example, a value of $w_f(k')$ in Equation 1 and Equation 2 described above) is a fixed value.

For example, the fixed value may be 1 (or -1).

In option 2-3-1, a first configuration type (for example, configuration type 1 (Configuration type 1)) may limit the number of applicable DMRS ports to a specific value (for example, only 1000 or 1001 (offsets ($\Delta$) are each 0 or 1)). Based on a value of k', different reference signal (for example, DMRS) ports may be configured.

In option 2-3-1, a second configuration type (for example, configuration type 2 (Configuration type 2)) may limit the number of applicable DMRS ports to a specific value (for example, only 1000, 1001, or 1002 (offsets ($\Delta$) are each 0, 2, or 4)). CDM groups in port 1000, port 1001, and port 1002 may be 0, 1, and 2, respectively. Based on a value of k', different reference signal (for example, DMRS) ports may be configured.

<<Option 2-3-2>>

The UE may calculate the sequence of the frequency direction (for example, the OCC sequence), based on a specific number (for example, N (N is an integer greater than or equal to 1)) of specific sequences, and may apply the sequence of the frequency direction every specific number of sub-carriers to which the reference signal is mapped.

The specific sequence may be, for example, a sequence of a cyclic shift.

The UE may determine a sequence of the frequency direction in respective reference signal (DMRS) ports, based on a cyclic shift sequence with N sequence lengths of N in which a rotation phase amount shifts by $2\pi/N$.

This N may be predefined by a specification, may be determined based on a specific rule, may be configured by RRC signaling, or may be determined based on information related to a reference signal included in DCI / MAC CE.

According to option 2-3-2, the sequence can be suitably applied to a case where the reference signal is mapped to N sub-carriers, and it is possible to perform multiplexing for N UEs (inter-UE multiplexing) by using only a sequence of a frequency domain (OCC).

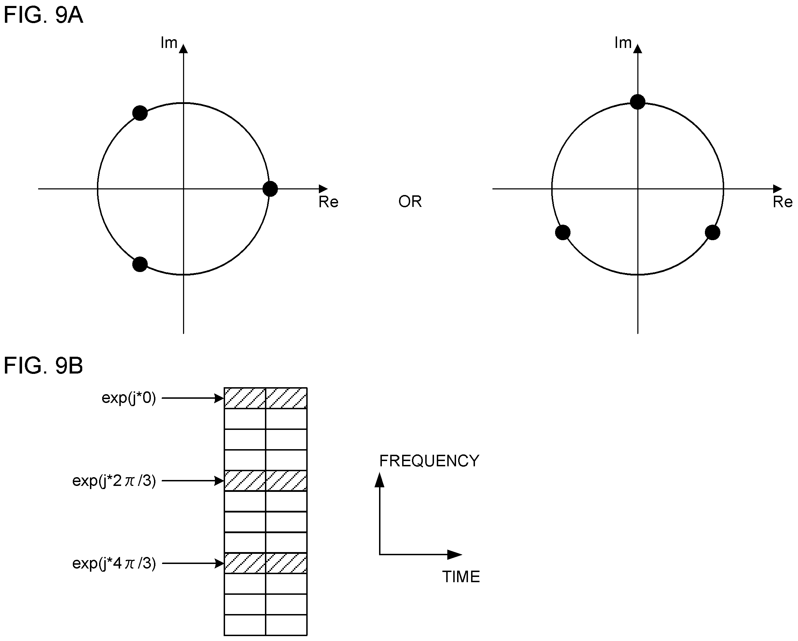

FIGS. 9A and 9B are diagrams to show examples of determination of the sequence according to option 2-3-2 in the second embodiment. The examples shown in FIGS. 9A and 9B show cases where N above is 3.

For example, the UE may determine an OCC sequence of the frequency direction in respective reference signal (DMRS) ports, based on a cyclic shift sequence with three sequence lengths of 3 in which a rotation phase amount shifts by $2\pi/3$ (see FIG. 9A). According to this method, the sequence can be suitably applied to a case where the reference signal is allocated every number of sub-carriers obtained by dividing total allocated sub-carriers by 3.

As shown in FIG. 9B, the UE may apply the OCC sequence every 4 sub-carriers in the whole RB. The UE may apply the OCC sequence every 3 sub-carriers of sub-carriers to which a DMRS is mapped.

According to the second embodiment above, it is possible to appropriately define/determine information related to a reference signal for determining mapping of a reference signal.

<Third Embodiment>

A third embodiment describes a method for notifying/receiving/transmitting information related to a reference signal.

A UE may receive the information related to the reference signal by using higher layer signaling (RRC signaling / MAC CE) / physical layer signaling (DCI).

The UE may receive one or more reference signal configurations by using the RRC signaling.

For the UE, one or more (or a plurality of) reference signal configurations (for example, reference signal configurations X and Y in the above first embodiment) may be configured. For the UE, one or more (or a plurality of) reference signal resource mappings may be configured.

For the UE, a condition for applying which reference signal configuration of the plurality of reference signal configurations may be configured by using the RRC signaling.

Mapping of the reference signal may be associated with time domain resource allocation (Time Domain Resource Assignment (TDRA)) for a UL channel (for example, a PUSCH) / DL channel (for example, a PDSCH).

For example, each row index of TDRA and a configuration of each reference signal mapping may be associated with each other. The UE may determine that, in scheduling of the UL channel (for example, the PUSCH) / DL channel (for example, the PDSCH), a reference signal configuration corresponding to a row index indicated by the DCI is applied.

The UE may receive, by using the RRC signaling, at least one piece of the information related to the reference signal in the above second embodiment.

The UE may receive, by using the MAC CE, indication related to one or more reference signal configurations.

For example, for the UE, which reference signal configuration of a plurality of reference signal configurations configured by using the RRC signaling is applied may be indicated by using the MAC CE.

The UE may receive, by using the MAC CE, at least one piece of the information related to the reference signal in the above second embodiment.

The UE may receive, by using the DCI, information related to a reference signal.

The DCI may be DCI transmitted in a UE-dedicated manner. In other words, the DCI may be DCI transmitted in a UE-dedicated control resource set (CORESET) / PDCCH / search space set. An RNTI for scrambling a CRC of the DCI may be a specific RNTI (for example, a C-RNTI / CS-RNTI / MCS-C-RNTI).

The DCI is UE-dedicated DCI, thereby allowing whether DCI has been decoded in each UE to be reported to a base station (network).

The DCI may be DCI for scheduling/activating the UL channel (for example, the PUSCH) / DL channel (for example, the PDSCH).

The DCI may be DCI transmitted in common to a plurality of UEs (groupcast/multicast DCI). In other words, the DCI may be DCI transmitted in a control resource set (CORESET) / PDCCH / search space set common to a plurality of UEs. The DCI is DCI common to a plurality of UEs, thereby enabling batch change/indication for a plurality of UEs using the same band, for example, when a level of learning varies for each band (each BWP, each sub-band, each cell).

An RNTI for scrambling a CRC of the DCI (DCI common to the plurality of UEs) may be an existing RNTI (for example, a C-RNTI / CS-RNTI / MCS-C-RNTI), or may be another (newly defined) RNTI.

The UE may determine identification information related to the RNTI to be used, based on a specific rule, based on a configuration by RRC signaling, or based on information related to a reference signal received by using DCI / MAC CE.

The UE may be configured with a PDCCH / CORESET / search space for receiving the DCI.

The UE may perform reporting/transmission of HARQ-ACK information for the DCI.

After a specific number (for example, N (N is an integer greater than or equal to 1)) of symbols/slots/ms from a last symbol for a PDCCH corresponding to received DCI, the UE may report HARQ-ACK information related to decoding of the DCI. This N may be determined based on a specific rule, may be determined based on configuration by RRC signaling, may be determined based on reporting of UE capability information, or may be determined based on received DCI for each numerology (for example, configuration of subcarrier spacing).

When receiving information related to a reference signal by using the DCI common to the plurality of UEs, the UE may transmit HARQ-ACK (NACK) information only when transmitting an ACK (or NACK).

When receiving information related to a reference signal by using the DCI common to the plurality of UEs, the UE may transmit/report, in addition to the HARQ-ACK information, information for identifying the UE (for example, a C-RNTI).

For the UE, one reference signal configuration of a plurality of reference signal configurations configured by using RRC signaling / MAC CE may be indicated by using DCI.

The UE may receive, by using the DCI, at least one piece of the information related to the reference signal in the above second embodiment.

According to the third embodiment above, it is possible to appropriately notify/transmit/receive information related to a reference signal.

<Fourth Embodiment>

A fourth embodiment describes a period for applying information related to a reference signal.

For the period for applying information related to a reference signal, a UE may determine the period in accordance with at least one of option 4-1 to option 4-3 below.

<<Option 4-1>>

When DCI for scheduling/activating a UL channel (for example, a PUSCH) / DL channel (for example, a PDSCH) includes information related to a reference signal, the information related to the reference signal (or change of configuration by the information related to the reference signal) may be applied to UL channels / DL channels scheduled/activated by the DCI.

The UL channels / DL channels may include at least one of an SPS PDSCH, a configured grant (CG) PUSCH (for example, a CG type 2 PUSCH), and PUSCH/PDSCH repetition transmission.

When the UL channels / DL channels are scheduled/activated by DCI, the UE may apply information related to a reference signal included in the DCI to all of the UL channels / DL channels.

When the UL channels / DL channels are scheduled/activated by DCI, the UE may apply information related to a reference signal included in the DCI to a UL channel / DL channel in from a first transmission/reception occasion to a specific number of (for example, N) transmission/reception occasions, from among the UL channels / DL channels. This N may be determined based on a specific rule, may be determined based on configuration by RRC signaling, or may be determined based on reporting of UE capability information.

When the UL channels / DL channels are scheduled/activated by DCI, the UE may apply information related to a reference signal included in the DCI to a UL channel / DL channel in a first transmission/reception occasion, from among the UL channels / DL channels.

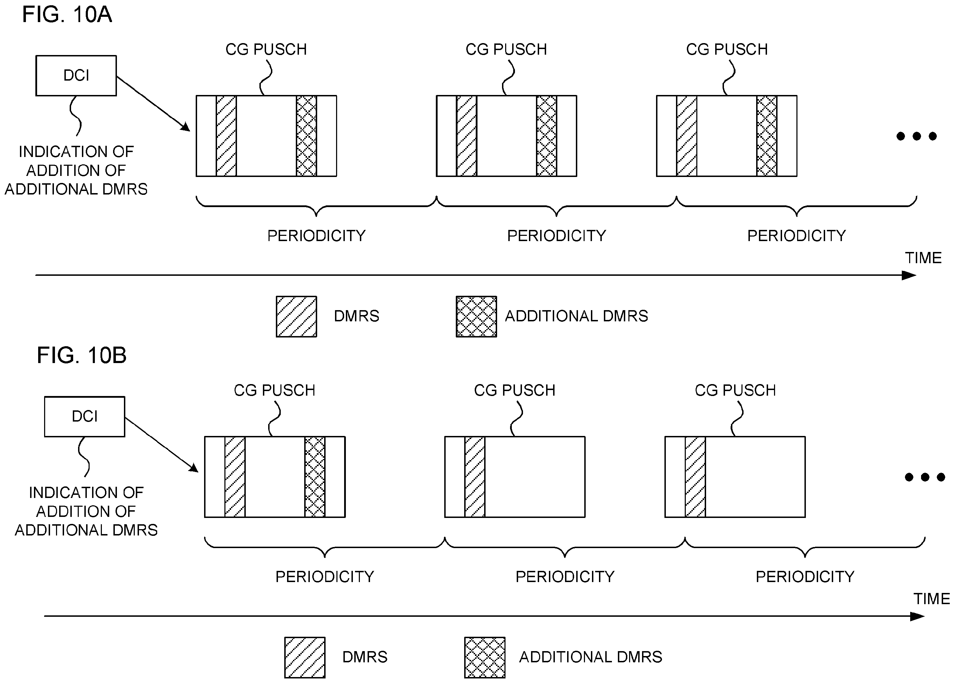

FIGS. 10A and 10B are diagrams to show examples of application of the information related to the reference signal according to option 4-1 in the fourth embodiment. In FIGS. 10A and 10B, the UE receives DCI for activating CG PUSCHs. The DCI includes, as the information related to the reference signal, information for indicating addition of one additional DMRS.

In an example shown in FIG. 10A, the UE applies the information related to the reference signal included in the DCI to (all of) the CG PUSCHs activated by the DCI.

In an example shown in FIG. 10B, the UE applies the information related to the reference signal included in the DCI to a CG PUSCH in a first transmission occasion, from among the CG PUSCHs activated by the DCI. On the other hand, the UE does not apply the information related to the reference signal included in the DCI to a CG PUSCH other than the CG PUSCH in the first transmission occasion.

<<Option 4-2>>

Option 4-2 mainly describes a timing at which the information related to the reference signal is applied (application of the information related to the reference signal is started).

The UE may judge/determine, in accordance with at least one of option 4-2-1 to option 4-2-3 below, a timing at which application of the information related to the reference signal is started.

{Option 4-2-1}

In a time resource (symbol/slot/sub-slot) after a specific number of (for example, N) time resources (symbols/slots/sub-slots/ms) from reception of (DCI / MAC CE including) information related to a reference signal, the UE may start application of the information related to the reference signal.

{Option 4-2-2}

In a time resource (symbol/slot/sub-slot) after a specific number of (for example, N) time resources (symbols/slots/sub-slots/ms) from transmission of a UL channel (for example, a PUCCH/PUSCH) including HARQ-ACK information corresponding to (DCI / MAC CE including) information related to a reference signal, the UE may start application of the information related to the reference signal.

{Option 4-2-3}

When DCI for scheduling/activating a UL channel (for example, a PUSCH) / DL channel (for example, a PDSCH) includes information related to a reference signal, in a time resource (symbol/slot/sub-slot) for a specific (for example, first) UL channel / DL channel of UL channels / DL channels scheduled/activated by the DCI, the UE may start application of the information related to the reference signal.

N in option 4-2-1 to option 4-2-3 described above may be a value greater than or equal to 0. N in option 4-2-1 to option 4-2-3 described above may be predefined by a specification, may be determined based on a specific rule, may be configured by using RRC signaling, may be determined based on UE capability information, may be determined based on information related to a reference signal included in DCI / MAC CE, or may be determined based on received DCI / MAC CE for each numerology (for example, configuration of subcarrier spacing).

Which of option 4-2-1 to option 4-2-3 described above is applied may be predefined by a specification, may be determined based on a specific rule, may be configured by using RRC signaling, may be determined based on UE capability information, or may be determined based on information related to a reference signal included in DCI / MAC CE.

Which specific UL channel / DL channel option 4-2 is applied to may be determined based on a specific rule, may be configured by using RRC signaling, may be determined based on UE capability information, or may be determined based on information related to a reference signal included in DCI / MAC CE. The specific UL channel / DL channel may be, for example, at least one of a PUSCH for communicating message A, a CG (type 1/2) PUSCH, an SPS PDSCH, and a PUSCH/PDSCH scheduled/activated by DCI.

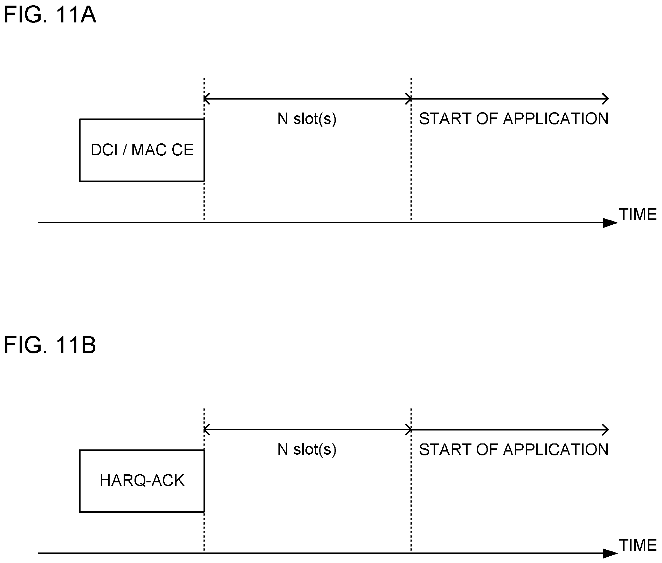

FIGS. 11A and 11B are diagrams to show examples of application of the information related to the reference signal according to option 4-2 in the fourth embodiment. In FIG. 11A, after N slot(s) from a last symbol for reception of DCI / MAC CE including information related to a reference signal, application of the information is started (option 4-2-1 described above). In FIG. 11B, after N slot(s) from transmission of HARQ-ACK information corresponding to information related to a reference signal, application of the information is started (option 4-2-2 described above).

<<Option 4-3>>

Option 4-3 mainly describes a timing at which application of the information related to the reference signal is ended.

The UE may judge/determine, in accordance with at least one of option 4-3-1 to option 4-3-9 below, a timing at which application of the information related to the reference signal is ended.

{Option 4-3-1}

In a time resource (symbol/slot/sub-slot) after a specific number of (for example, M) time resources (symbols/slots/sub-slots/ms) from transmission of HARQ-ACK information corresponding to (PDSCH including) an RRC reconfiguration message, the UE may end application of the information related to the reference signal.

{Option 4-3-2}

In a time resource (symbol/slot/sub-slot) after the UE is in an RRC inactive mode / RRC idle mode, the UE may end application of the information related to the reference signal.

{Option 4-3-3}

In a time resource (symbol/slot/sub-slot) after a specific number of (for example, M) time resources (symbols/slots/sub-slots/ms) from reception of (DCI / MAC CE including) new information related to a reference signal, the UE may end application of previous information related to the reference signal.

{Option 4-3-4}

At a timing of (start of) application of (DCI / MAC CE including) new information related to a reference signal, the UE may end application of previous information related to the reference signal.
The timing of (start of) application of the new information related to the reference signal may be at least one timing described in option 4-2 above.

{Option 4-3-5}

In a time resource (symbol/slot/sub-slot) after a specific number of (for example, M) time resources (symbols/slots/sub-slots/ms) from reception of (DCI / MAC CE including) information related to a reference signal, the UE may end application of the information related to the reference signal.

{Option 4-3-6}

In a time resource (symbol/slot/sub-slot) after a specific number of (for example, M) time resources (symbols/slots/sub-slots/ms) from transmission of a UL channel (for example, a PUCCH/PUSCH) including HARQ-ACK information corresponding to (DCI / MAC CE including) information related to a reference signal, the UE may end application of the information related to the reference signal.

{Option 4-3-7}

When DCI for scheduling/activating a UL channel (for example, a PUSCH) / DL channel (for example, a PDSCH) includes information related to a reference signal, in a time resource (symbol/slot/sub-slot) after a specific number of (for example, M) time resources (symbols/slots/sub-slots/ms) from a time resource (symbol/slot/sub-slot) for a specific (for example, last) UL channel / DL channel of UL channels / DL channels scheduled/activated by the DCI, the UE may end application of the information related to the reference signal.

{Option 4-3-8}

When DCI for scheduling/activating a DL channel (for example, a PDSCH) includes information related to a reference signal, in a time resource (symbol/slot/sub-slot) after a specific number of (for example, M) time resources (symbols/slots/sub-slots/ms) from transmission of a UL channel (PUCCH/PUSCH) including HARQ-ACK information corresponding to the (last) scheduled/activated DL channel, the UE may end application of the information related to the reference signal.

{Option 4-3-9}

In a time resource (symbol/slot/sub-slot) at at least one of a timing after a specific number of (for example, M) time resources (symbols/slots/sub-slots/ms) and a timing after L UL channel transmissions / DL channel receptions, from a start of application of information related to a reference signal, the UE may end application of the information related to the reference signal.
N and L in option 4-3-1 to option 4-3-9 described above may be a value greater than or equal to 0. N and L in option 4-3-1 to option 4-3-9 described above may be predefined by a specification, may be determined based on a specific rule, may be configured by using RRC signaling, may be determined based on UE capability information, may be determined based on information related to a reference signal included in DCI / MAC CE, or may be determined based on received DCI / MAC CE for each numerology (for example, configuration of subcarrier spacing).
Which of option 4-3-1 to option 4-3-9 described above is applied may be predefined by a specification, may be determined based on a specific rule, may be configured by using RRC signaling, may be determined based on UE capability information, or may be determined based on information related to a reference signal included in DCI / MAC CE.
Which specific UL channel / DL channel option 4-3 is applied to may be determined based on a specific rule, may be configured by using RRC signaling, may be determined based on UE capability information, or may be determined based on information related to a reference signal included in DCI / MAC CE. The specific UL channel / DL channel may be, for example, at least one of a PUSCH for communicating message A, a CG (type 1/2) PUSCH, an SPS PDSCH, and a PUSCH/PDSCH scheduled/activated by DCI.

According to the fourth embodiment above, it is possible to appropriately determine a period for application of information related to a reference signal.

<Fifth Embodiment>

A fifth embodiment describes a case where a reference signal (first reference signal) and another reference signal (second reference signal) different from the reference signal overlap each other.

In the present embodiment, the first reference signal may mean a reference signal in each of the first to fourth and sixth to ninth embodiments. In the present embodiment, the second reference signal may be, for example, a CSI-RS.

A UE may assume that (DCI / MAC CE including) information related to the first reference signal does not include indication in which a resource of the first reference signal indicated by the information and a resource of the second reference signal overlap each other.

The resource of the first reference signal may be, for example, at least one of a resource of a DMRS, a DMRS resource of a CDM group with a potential DMRS port for a PDSCH, and a resource of a PTRS.

Note that the above CDM group with the potential DMRS port may mean a CDM group related to a DMRS mapped to resources with possible DMRS mapping, the resources being consecutive/non-consecutive in a frequency direction.

When (DCI / MAC CE including) information related to the first reference signal includes indication in which a resource of the first reference signal indicated by the information and a resource of the second reference signal overlap each other, the UE may operate based on a specific rule.

The specific rule may be at least one of option 5-1 to option 5-3 below.

<<Option 5-1>>

The UE may apply the information related to the first reference signal.

The UE may not receive/decode the (resource of) second reference signal overlapping the (resource of) first reference signal.

<<Option 5-2>>

The UE may not apply the information related to the first reference signal.

The UE may not apply all of the information related to the first reference signal.

The UE may apply a part of the information related to the first reference signal, and may not apply the remaining part related to the first reference signal.

<<Option 5-3>>

In application of the information related to the first reference signal, the UE may change a resource to which the first reference signal is mapped so that the first reference signal does not overlap the second reference signal, to apply the information.

For example, in application of the information related to the first reference signal, for a part of the first reference signal overlapping the second reference signal, the UE may shift a resource to which the first reference signal is mapped by a specific number of symbols so that the first reference signal does not overlap the second reference signal.

Which of option 5-1 to option 5-3 described above is applied may be predefined by a specification, may be determined based on a specific rule, may be configured by using RRC signaling, or may be determined based on UE capability information.

Application of the present embodiment may be limited only to, for example, option 1-2 (or 1-3) in the first embodiment mentioned above.

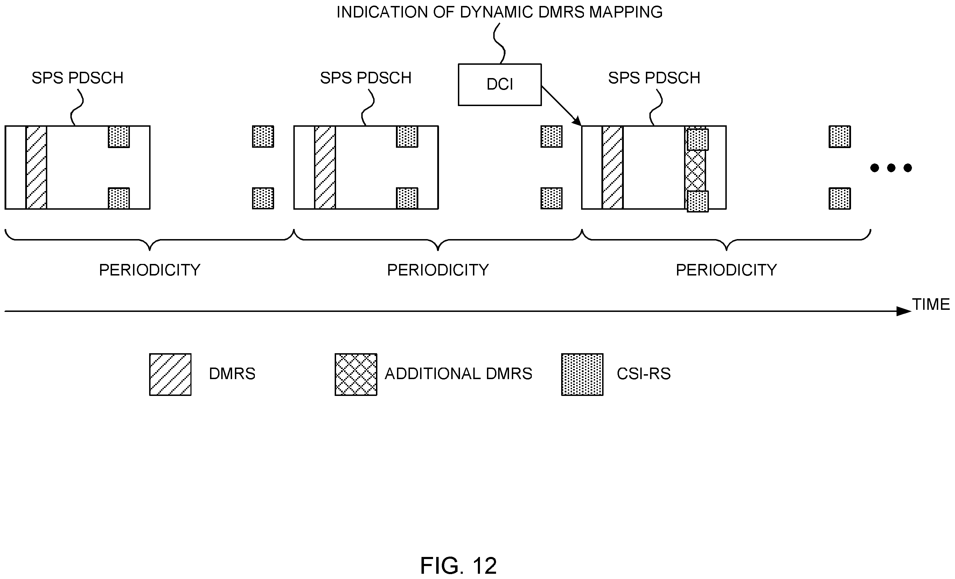

FIG. 12 is a diagram to show an example of the overlap between the reference signals according to the fifth embodiment. In FIG. 12, the UE receives SPS PDSCHs.

In the SPS PDSCHs in a first reception occasion and a second reception occasion, the first reference signal (PDSCH DMRS) and the second reference signal (CSI-RS) do not overlap each other.

In the example shown in FIG. 12, the UE receives information related to the first reference signal in the third reception occasion, and transmits an additional DMRS.

As shown in the example shown in FIG. 12, for a case where the first reference signal and the second reference signal are overlapped by indication based on the information related to the first reference signal, for example, at least one of option 5-2 and option 5-3 mentioned above may be applied.

According to the fifth embodiment above, it is possible to define appropriate operation for a case where a first reference signal and a second reference signal overlap each other.

<Sixth Embodiment>

A sixth embodiment describes PDSCH processing procedure time / PDSCH decoding time.

In the present disclosure, the PDSCH processing procedure time may mean elapsed time (symbol(s)) from a last symbol for a PDSCH until transmission of a HARQ-ACK corresponding to the PDSCH.

The PDSCH processing procedure time may be determined based on the PDSCH decoding time. The PDSCH decoding time may be included in the PDSCH processing procedure time.

A UE may, when receiving information related to a reference signal, determine/judge the PDSCH processing procedure time / PDSCH decoding time, based on at least one of option 6-1 and option 6-2 below.

<<Option 6-1>>

The UE may, even when receiving information related to a reference signal, judge/determine the PDSCH processing procedure time / PDSCH decoding time, based on a specific higher layer (RRC) parameter.

The specific higher layer (RRC) parameter may be information related to an additional position of a DMRS included in a DL DMRS configuration (for example, DMRS-downlinkConfig) (for example, dmrs-Additional-Position). The specific higher layer (RRC) parameter may be a parameter configured before reception of the information related to the reference signal.

<<Option 6-2>>

The UE may determine/judge the PDSCH processing procedure time / PDSCH decoding time, based on information related to a reference signal.

The information related to the reference signal may be information related to the number of symbols for an additional reference signal (for example, the number of OFDM symbols for an additional DMRS).

Configuration of the PDSCH processing procedure time / PDSCH decoding time corresponding to the number of symbols for the additional reference signal may be defined.

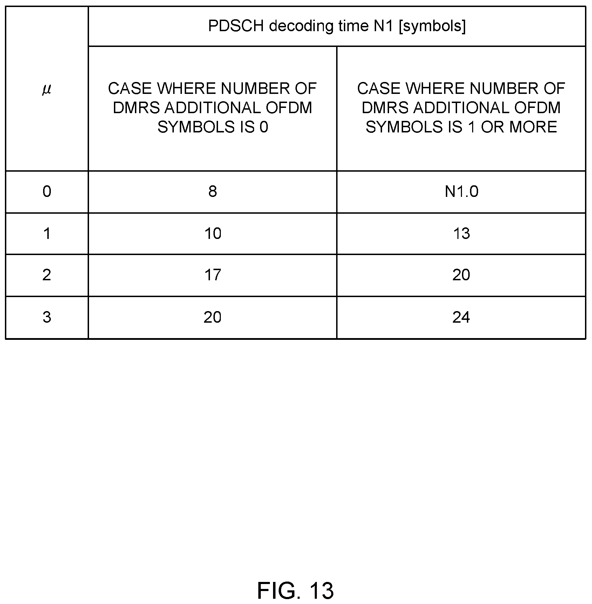

FIG. 13 is a diagram to show an example of determination of the PDSCH decoding time according to option 6-2 in the sixth embodiment. The UE determines/judges the PDSCH processing procedure time / PDSCH decoding time, based on such correspondence (for example, a table) as that shown in FIG. 13.

The example shown in FIG. 13 describes correspondence based on whether the number of OFDM symbols for the additional DMRS is 0, whether the number of OFDM symbols for the additional DMRS is 1 or more, and subcarrier spacing configuration ($\mu$) for the PDSCH, but a condition and a value of the time in the correspondence are just examples. For example, the number of OFDM symbols for the additional DMRS as the condition may be an arbitrary value, and the number of rows indicating the numbers of OFDM symbols for the additional DMRS as the conditions may be 3 or more.

Which of option 6-1 or option 6-2 described above is applied may be predefined by a specification, may be determined based on a specific rule, may be configured by using RRC signaling, or may be determined based on UE capability information.

According to the sixth embodiment above, even when configuration related a reference signal is dynamically changed by information related to a reference signal, it is possible to appropriately determine/judge PDSCH processing procedure time / PDSCH decoding time.

<Seventh Embodiment>

A seventh embodiment describes a bitwidth of information related to a reference signal.

For a bit field of information related to a reference signal included in a MAC CE / DCI (format), at least one of option 7-1 and option 7-2 below may be applied.

<<Option 7-1>>

A UE may not assume reception of DCI / MAC CE including the information related to the reference signal in which a bitwidth of the bit field is changed.

When a plurality of reference signal configurations are configured for the UE, the UE may judge/determine a bitwidth of the information related to the reference signal, based on a configuration of a specific bitwidth.

The configuration of the specific bitwidth may be, for example, a reference signal configuration requiring the longest (or maximum) bitwidth.

For example, when the UE receives DCI / MAC CE associated with a reference signal configuration corresponding to a bitwidth shorter than the longest bitwidth, the UE may assume that a fixed value (for example, 0 (or 1)) is added (padded) to an MSB (or LSB) of the bit field so that the bitwidth is equal to the same bitwidth as the longest bitwidth.

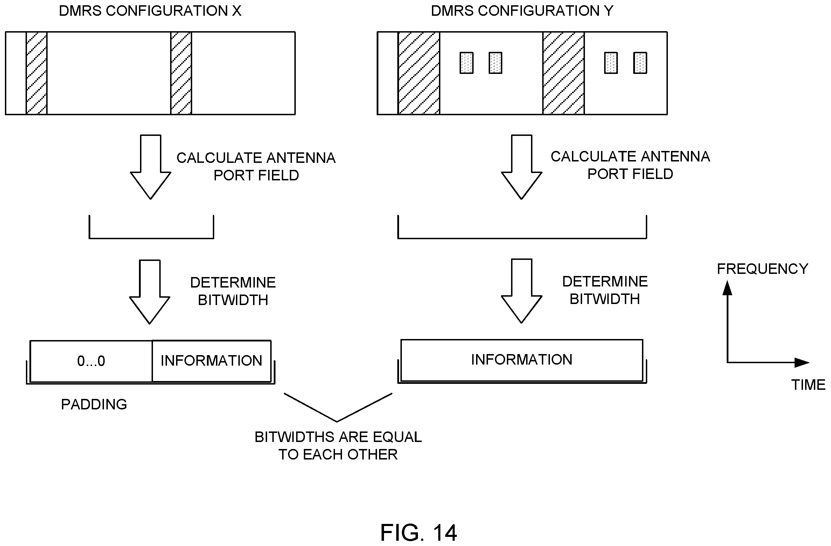

FIG. 14 is a diagram to show an example of a bitwidth of the MAC CE / DCI field according to option 7-1 in the seventh embodiment. In the example shown in FIG. 14, a plurality of reference signal configurations (DMRS configurations X and Y) are configured for the UE.

In the example shown in FIG. 14, a bit field of information related to a reference signal associated with DMRS configuration X (in the example in FIG. 14, an antenna port field for DMRS configuration X) is shorter than a bit field of information related to a reference signal associated with DMRS configuration Y. In this case, a bitwidth of the information included in a MAC CE / DCI is calculated based on a bitwidth of the bit field of the information related to the reference signal associated with DMRS configuration Y requiring a longer (longest) bit field.

In this case, a fixed value (0) is padded to a bitwidth of the information related to the reference signal associated with DMRS configuration X so that the bitwidth is equal to a bitwidth of the information related to the reference signal associated with DMRS configuration Y.

<<Option 7-2>>

For the UE, whether a bitwidth of the bit field of the information related to the reference signal included in the MAC CE / DCI (format) can be changed may be configured.

The configuration may be performed by using higher layer signaling (RRC signaling / MAC CE) / physical layer signaling (DCI).

When a bitwidth of the bit field of the information related to the reference signal included in the MAC CE / DCI (format) not being changed is configured for the UE, the UE may operate in accordance with at least one of option 7-2-1 to option 7-2-3 below.

{Option 7-2-1}

The UE may not assume reception of MAC CE / DCI including the information related to the reference signal in which the bitwidth is changed.

{Option 7-2-2}

The UE may receive MAC CE / DCI including the information related to the reference signal in which the bitwidth is changed.

The UE may not apply the information related to the reference signal included in the MAC CE / DCI.

{Option 7-2-3}

The UE may receive MAC CE / DCI including the information related to the reference signal in which the bitwidth is changed.

In a specific case, the UE may apply the information related to the reference signal included in the MAC CE / DCI.

The specific case may be, for example, a case where the information related to the reference signal is shorter than a bitwidth necessary for an already configured reference signal configuration. The specific case may be, for example, a case where the information related to the reference signal is equal to a bitwidth necessary for an already configured reference signal configuration.

The UE may not assume reception of MAC CE / DCI including the information related to the reference signal changed to a bitwidth longer than the bitwidth necessary for the already configured reference signal configuration.

When the UE receives DCI / MAC CE associated with a reference signal configuration corresponding to a bitwidth shorter than the longest bitwidth, the UE may assume that a fixed value (for example, 0 (or 1)) is added (padded) to an MSB (or LSB) of the bit field so that the bitwidth is equal to the same bitwidth as the longest bitwidth.

When receiving MAC CE / DCI including the information related to the reference signal changed to a bitwidth longer than the bitwidth necessary for the already configured reference signal configuration, the UE may not apply all of the information related to the reference signal.

When receiving MAC CE / DCI including the information related to the reference signal changed to a bitwidth longer than the bitwidth necessary for the already configured reference signal configuration, the UE may apply only a part of the information related to the reference signal.

Which of option 7-2-1 to option 7-2-3 described above is applied may be predefined by a specification, may be determined based on a specific rule, may be configured by using RRC signaling, or may be determined based on UE capability information.

According to the seventh embodiment above, it is possible to appropriately determine a bit field of information related to a reference signal even when mapping of the reference signal is dynamically configured/indicated.

<Eighth Embodiment>

An eighth embodiment describes limitation to an additional reference signal.

For the number of symbols for the additional reference signal, at least one of option 8-1 and option 8-2 below may be applied.

In the present embodiment, the additional reference signal and an additional DMRS may be interchangeably interpreted. In the present disclosure, the number of symbols for the additional reference signal and the number of OFDM symbols for the additional DMRS may be interchangeably interpreted.

In the present embodiment, the number of symbols for the additional reference signal may be limited/determined based on a symbol position of a first reference signal. In this case, the first reference signal may be a reference signal of a specific mapping type (for example, mapping type A) .

In the present embodiment, the number of symbols for the additional reference signal may be limited/determined based on a symbol position of a front loaded reference signal.

Note that in the present disclosure, the limitation may mean that the number of symbols for the additional reference signal is limited based on at least one of a higher layer parameter indicating a position of the first reference signal (for example, dmrs-TypeA-Position), a mapping type of a UL/DL channel, and duration of the UL/DL channel.

Note that in the present disclosure, the limitation may mean that the number of symbols for the additional reference signal is limited based on a higher layer parameter indicating a maximum number of front loaded reference signals (for example, maxLength).

<<Option 8-1>>

The UE may assume that information related to a reference signal does not include a configuration/indication exceeding the limit to the number of symbols for the additional reference signal.

<<Option 8-2>>

When the information related to the reference signal includes a configuration/indication exceeding the limit to the number of symbols for the additional reference signal, the UE may operate based on at least one of option 8-2-1 and option 8-2-2 below.

{Option 8-2-1}

The UE may apply the information related to the reference signal regardless of the limit to the number of symbols for the additional reference signal.

{Option 8-2-2}

The UE may not apply the information related to the reference signal for indicating mapping of the reference signal exceeding the limit to the number of symbols for the additional reference signal.
The UE may not apply all of the received information related to the reference signal.
The UE may not apply only a part of the received information related to the reference signal.
Which of option 8-2-1 or option 8-2-2 described above is applied may be predefined by a specification, may be determined based on a specific rule, may be configured by using RRC signaling, or may be determined based on UE capability information.
According to the eighth embodiment above, it is possible to appropriately perform operation related to limitation to the number of symbols for an additional reference signal even when mapping of a reference signal is dynamically configured/indicated.
<Ninth Embodiment>
At least one of the above-mentioned embodiments may be applied only to a UE that has reported a specific UE capability or that supports the specific UE capability.
The specific UE capability may indicate at least one of the following:

- Whether UE supports specific operation/information in each embodiment
- Whether UE supports application of each option / combination of options in each embodiment

The above UE capability may be reported as whether the UE can support as a UE.
The above UE capability may be reported for all the frequencies, may be reported for each frequency, may be reported for each frequency range (for example, Frequency Range 1 (FR1), Frequency Range 2 (FR2), FR2-1, FR2-2), may be reported for each cell, or may be reported for each subcarrier spacing (SCS).
The above UE capability may be reported in common for or independently of time division duplex (TDD) and frequency division duplex (FDD).
At least one of the above-mentioned embodiments may be applied to a case where the UE is configured with specific information related to the above-mentioned embodiments by higher layer signaling. For example, the specific information may be reduced CSI feedback / information indicating enabling of reduced CSI feedback, an arbitrary RRC parameter for specific release (for example, Rel. 18), or the like.
According to the ninth embodiment above, the UE can implement the above functions while maintaining compatibility with an existing specification.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

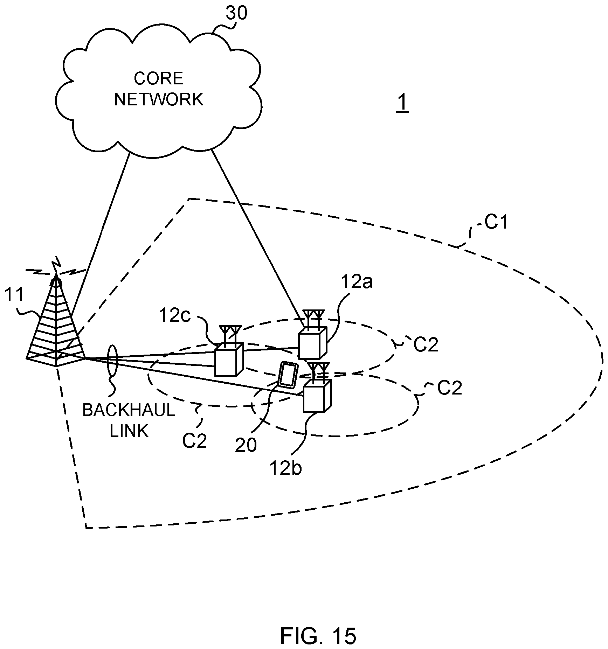

FIG. 15 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).
The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.
In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.
The radio communication system 1 may support dual connectivity between a plurality of base stations in the same RAT (for example, dual connectivity (NR-NR Dual Connectivity (NN-DC)) where both of an MN and an SN are base stations (gNB) of NR).
The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

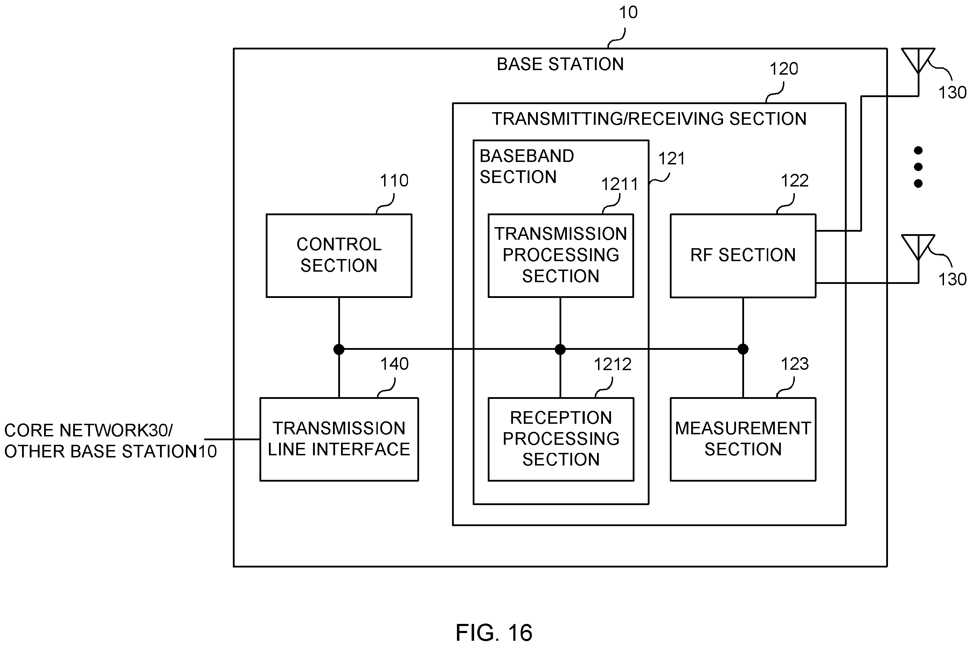

FIG. 16 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit one or more reference signal configurations. The control section 110 may control, based on at least one of information related to a reference signal and a specific condition, at least one of transmission and reception of the reference signal to which at least a part of at least one reference signal configuration of the reference signal configurations is applied (first embodiment).

The transmitting/receiving section 120 may transmit one or more reference signal configurations by using (Radio Resource Control (RRC)) signaling, and may transmit information related to a reference signal by using at least one of downlink control information (DCI) and a Medium Access Control (MAC) control element (CE). The control section 110 may determine mapping of the reference signal by using the reference signal configuration and the information related to the reference signal (second and third embodiments).

The transmitting/receiving section 120 may transmit one or more reference signal configurations and information related to a reference signal. The control section 110 may determine a period for application of the information related to the reference signal, and may determine mapping of the reference signal by using the reference signal configuration and the information related to the reference signal (fourth embodiment).

The transmitting/receiving section 120 may transmit information related to a reference signal by using at least one of downlink control information (DCI) and a Medium Access Control (MAC) control element (CE). When a resource of the reference signal based on the information related to the reference signal and a resource of another reference signal different from the reference signal are configured to overlap each other, the control section 110 may control transmission of the reference signal and such another reference signal (fifth embodiment).

(User Terminal)

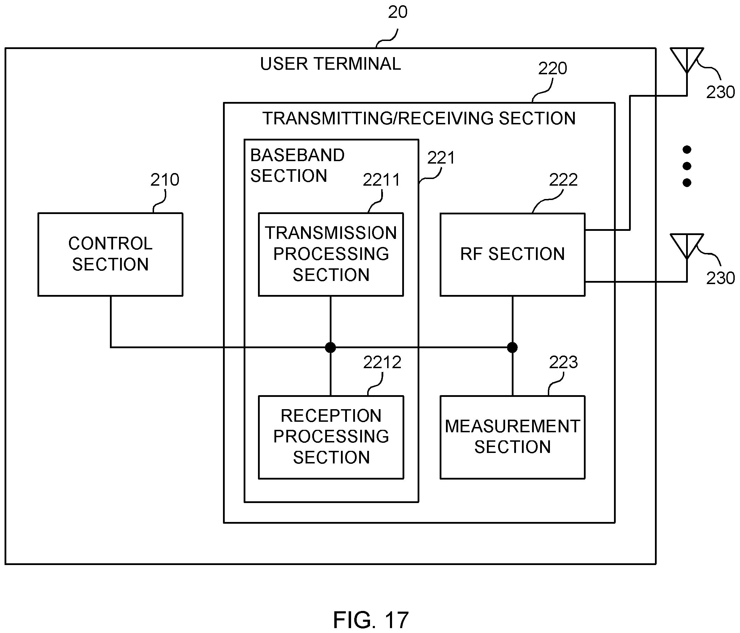

FIG. 17 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive one or more reference signal configurations. The control section 210 may control, based on at least one of information related to a reference signal and a specific condition, application of at least one reference signal configuration of the reference signal configurations (first embodiment).

The reference signal configuration may include at least one of a configuration of a demodulation reference signal and a configuration of a phase tracking reference signal (first embodiment).

The one or more reference signal configurations are a plurality of configured reference signal configurations, and the control section 210 may select/determine, based on the information related to the reference signal and the specific condition, one reference signal configuration from the plurality of configured reference signal configurations (first embodiment).

The specific condition may be a condition based on at least one of application of bundling of a reference signal, whether transmission of a channel over a plurality of slots is performed, overlap with another reference signal different from the reference signal, a modulation order, the number of layers, the number of ports for the reference signal, a format of downlink control information for scheduling a physical downlink shared channel or a physical uplink shared channel, whether the reference signal is used for a specific channel, a radio network temporary identifier used for scrambling of a cyclic redundancy check of the downlink control information, a configuration of a configured grant, whether the downlink control information includes the information related to the reference signal, a state of the terminal corresponding to a learning state, and a velocity of the terminal (first embodiment).

The transmitting/receiving section 220 may receive one or more reference signal configurations by using (Radio Resource Control (RRC)) signaling, and may receive information related to a reference signal by using at least one of downlink control information (DCI) and a Medium Access Control (MAC) control element (CE). The control section 210 may control, based on the reference signal configuration and the information related to the reference signal, mapping of the reference signal (second and third embodiments).

The control section 210 may determine, based on the information related to the reference signal, at least one of a slot and a symbol to which the reference signal is not mapped (second embodiment).

The control section 210 may determine, based on the information related to the reference signal, a subcarrier to which the reference signal is not mapped (second embodiment).

The control section 210 may determine, based on the information related to the reference signal, an orthogonal cover code sequence applied to the reference signal (second embodiment).

The transmitting/receiving section 220 may receive one or more reference signal configurations and information related to a reference signal. The control section 210 may determine a period for application of the information related to the reference signal, and may determine, based on the reference signal configuration and the information related to the reference signal, mapping of the reference signal (fourth embodiment).

When the reference signal is a reference signal for a channel scheduled or activated over a plurality of slots, the control section 210 may apply the information related to the reference signal to all of the channel (fourth embodiment).

When the reference signal is a reference signal for a channel scheduled or activated over a plurality of slots, the control section 210 may apply the information related to the reference signal in a first transmission occasion in the channel (fourth embodiment).

The control section 210 may determine at least one of a start and an end of application of the information related to the reference signal at at least one of a timing after a lapse of a first period from reception of the information related to the reference signal and a timing after a lapse of a second period from reception of a Hybrid Automatic Repeat reQuest ACKnowledgement (HARQ-ACK) for downlink control information including the information related to the reference signal (fourth embodiment).

The transmitting/receiving section 220 may receive information related to a reference signal by using at least one of downlink control information (DCI) and a Medium Access Control (MAC) control element (CE). When a resource of the reference signal based on the information related to the reference signal and a resource of another reference signal different from the reference signal are configured to overlap each other, the control section 210 may control reception of the reference signal and such another reference signal (fifth embodiment).

The control section 210 may determine, based on information related to an additional reference signal included in the DCI, decoding time for a physical downlink shared channel (sixth embodiment).

Even in a case where a plurality of reference signal configurations are configured and where a bitwidth necessary for the information related to the reference signal for each of the plurality of reference signal configurations varies, the control section 210 may determine that a bitwidth of the information related to the reference signal is a fixed value, or may assume that the bitwidth is padded to be the fixed value (seventh embodiment).

The control section 210 may determine whether the information related to the reference signal includes indication exceeding a limit to the number of symbols for an additional reference signal (eighth embodiment).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

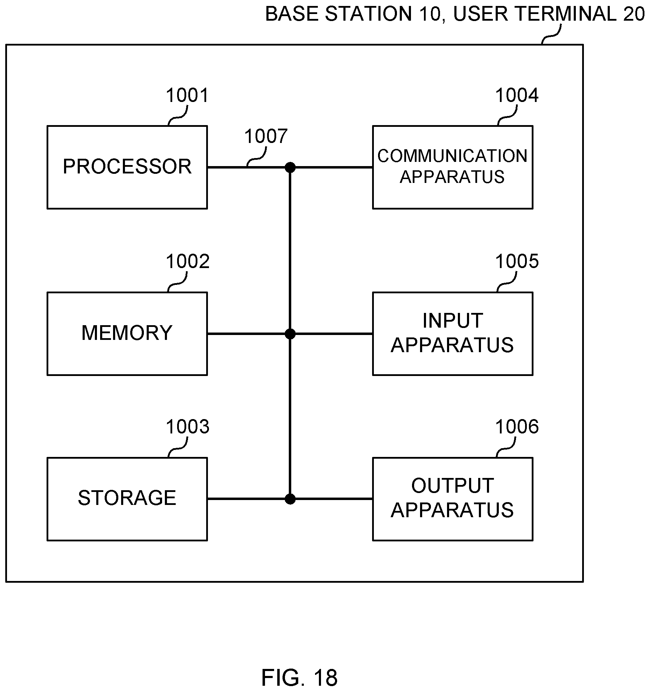

For example, a base station, a user terminal, and so on according to one embodiment of the present disclosure may function as a computer that executes the processes of the radio communication method of the present disclosure. FIG. 18 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of sub-

carriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device,"  "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

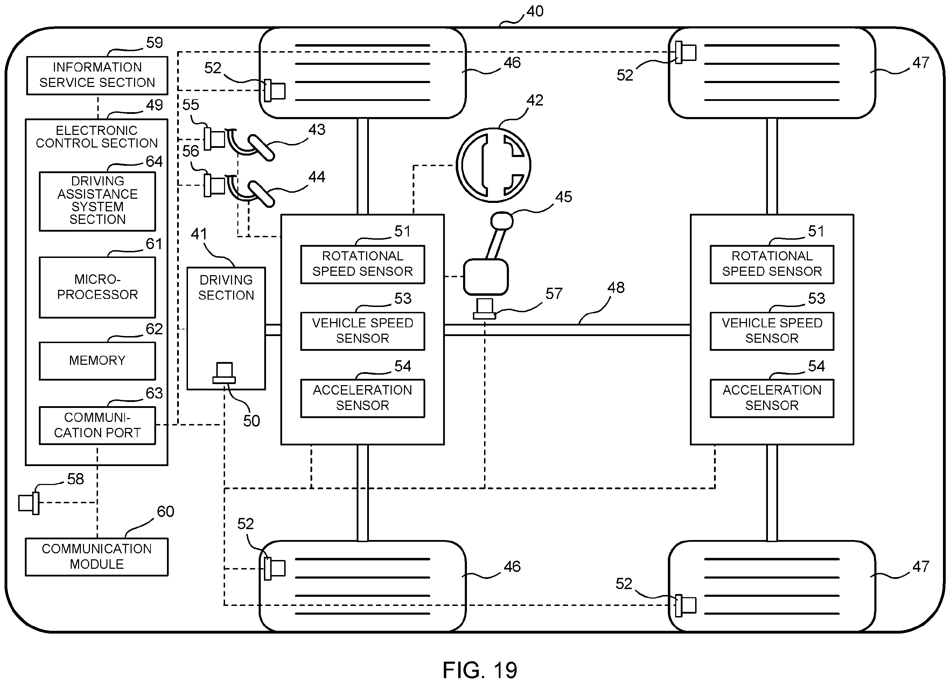

FIG. 19 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

    a receiving section that receives one or more reference signal configurations by using (Radio Resource Control (RRC)) signaling and that receives information related to a reference signal by using at least one of downlink control information (DCI) and a Medium Access Control (MAC) control element (CE); and
    a control section that controls, based on the reference signal configuration and the information related to the reference signal, mapping of the reference signal.

2. The terminal according to claim 1, wherein the control section determines, based on the information related to the reference signal, at least one of a slot and a symbol to which the reference signal is not mapped.

3. The terminal according to claim 1, wherein the control section determines, based on the information related to the reference signal, a sub-carrier to which the reference signal is not mapped.

4. The terminal according to claim 1, wherein the control section determines, based on the information related to the reference signal, an orthogonal cover code sequence applied to the reference signal.

5. A radio communication method for a terminal, the radio communication method comprising:

    receiving one or more reference signal configurations by using (Radio Resource Control (RRC)) signaling and receiving information related to a reference signal by using at least one of downlink control information (DCI) and a Medium Access Control (MAC) control element (CE); and
    controlling, based on the reference signal configuration and the information related to the reference signal, mapping of the reference signal.

6. A base station comprising:

    a transmitting section that transmits one or more reference signal configurations by using (Radio Resource Control (RRC)) signaling and that transmits information related to a reference signal by using at least one of downlink control information (DCI) and a Medium Access Control (MAC) control element (CE); and
    a control section that determines mapping of the reference signal by using the reference signal configuration and the information related to the reference signal.

DMRS CONFIGURATION X                    DMRS CONFIGURATION Y

DMRS CONFIGURATION X

FREQUENCY

TIME

DMRS

PTRS

FIG. 1

EP 4 451 763 A1

DMRS CONFIGURATION X

INDICATION OF CHANGE OF NUMBER
OF ADDITIONAL DMRSS

INDICATION OF CHANGE OF MAXIMUM NUMBER
OF FRONT-LOADED DMRS OFDM SYMBOLS

DMRS

FREQUENCY

TIME

FIG. 2

EP 4 451 763 A1

WHETHER DMRS
BUNDLING IS APPLIED

WHETHER PUSCH TRANSMISSION
OCCASIONS OF PLURALITY OF
SLOTS ARE PRESENT FOR
ALLOCATION OF 1 TB

DMRS
CONFIGURATION B

DMRS
CONFIGURATION A

DMRS
CONFIGURATION A

FIG. 3

EP 4 451 763 A1

EP 4 451 763 A1

FIG. 4A

DMRS

FREQUENCY

TIME

FIG. 4B

DMRS

FREQUENCY

TIME

FIG. 5A

1slot

DMRS

FREQUENCY

TIME

FIG. 5B

1slot

DMRS

FREQUENCY

TIME

EP 4 451 763 A1

FIG. 6

FIG. 7A

FIG. 7B

FIG. 8

FIG. 9A

OR

FIG. 9B

exp(j*0)

exp(j*2π/3)

exp(j*4π/3)

FREQUENCY

TIME

EP 4 451 763 A1

## FIG. 10A

DCI

INDICATION OF
ADDITION OF
ADDITIONAL DMRS

CG PUSCH     CG PUSCH     CG PUSCH

PERIODICITY    PERIODICITY    PERIODICITY

TIME

DMRS     ADDITIONAL DMRS

## FIG. 10B

DCI

INDICATION OF
ADDITION OF
ADDITIONAL DMRS

CG PUSCH     CG PUSCH     CG PUSCH

PERIODICITY    PERIODICITY    PERIODICITY

TIME

DMRS     ADDITIONAL DMRS

EP 4 451 763 A1

## FIG. 11A

DCI / MAC CE

N slot(s)   START OF APPLICATION

TIME

EP 4 451 763 A1

## FIG. 11B

HARQ-ACK

N slot(s)   START OF APPLICATION

TIME

INDICATION OF DYNAMIC DMRS MAPPING

SPS PDSCH

SPS PDSCH

DCI

SPS PDSCH

PERIODICITY

PERIODICITY

PERIODICITY

TIME

DMRS

ADDITIONAL DMRS

CSI-RS

FIG. 12

EP 4 451 763 A1

| $\mu$ | PDSCH decoding time N1 [symbols] | |
| --- | --- | --- |
| | CASE WHERE NUMBER OF DMRS ADDITIONAL OFDM SYMBOLS IS 0 | CASE WHERE NUMBER OF DMRS ADDITIONAL OFDM SYMBOLS IS 1 OR MORE |
| 0 | 8 | N1.0 |
| 1 | 10 | 13 |
| 2 | 17 | 20 |
| 3 | 20 | 24 |

FIG. 13

EP 4 451 763 A1

FIG. 14

FIG. 15

FIG. 16

EP 4 451 763 A1

FIG. 17

BASE STATION 10, USER TERMINAL 20

1001

PROCESSOR

1007

COMMUNICATION
APPARATUS

1004

1002

MEMORY

1005

INPUT
APPARATUS

1003

STORAGE

1006

OUTPUT
APPARATUS

FIG. 18

FIG. 19

## INTERNATIONAL SEARCH REPORT

| International application No. |
| --- |
| **PCT/JP2021/046614** |

**A. CLASSIFICATION OF SUBJECT MATTER**

*H04W 72/04*(2009.01)i; *H04L 27/26*(2006.01)i
FI: H04W72/04 136; H04L27/26 113; H04L27/26 114

According to International Patent Classification (IPC) or to both national classification and IPC

**B. FIELDS SEARCHED**

Minimum documentation searched (classification system followed by classification symbols)

H04W4/00-99/00; H04B7/24-7/26; H04L27/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2017-537486 A (TELEFONAKTIEBOLAGET LM ERICSSON (PUBL)) 14 December 2017 (2017-12-14) | 1, 5, 6 |
|   | paragraphs [0073]-[0080], fig. 12 | |
| Y | paragraphs [0073]-[0080], fig. 12 | 2-4 |
| Y | WO 2018/229958 A1 (NTT DOCOMO INC.) 20 December 2018 (2018-12-20) | 2 |
|   | paragraphs [0066], [0067] | |
| Y | WO 2017/217456 A1 (NTT DOCOMO INC.) 21 December 2017 (2017-12-21) | 2 |
|   | paragraphs [0066], [0069] | |
| Y | WO 2017/110959 A1 (NTT DOCOMO INC.) 29 June 2017 (2017-06-29) | 3 |
|   | paragraph [0076] | |
| Y | JP 2019-004320 A (SHARP KABUSHIKI KAISHA) 10 January 2019 (2019-01-10) | 4 |
|   | paragraph [0047] | |

☐ Further documents are listed in the continuation of Box C.  ☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 July 2022** | **02 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/046614**

| Patent document cited in search report | | | Publication date (day/month/year) | Patent family member(s) | | | Publication date (day/month/year) |
|---|---|---|---|---|---|---|---|
| JP | 2017-537486 | A | 14 December 2017 | US | 2016/0277954 | A1 | |
| | | | | paragraphs [0095]-[0102], fig. 12 | | | |
| | | | | WO | 2016/056980 | A1 | |
| | | | | CN | 106797300 | A | |
| WO | 2018/229958 | A1 | 20 December 2018 | US | 2021/0143961 | A1 | |
| | | | | paragraphs [0079], [0080] | | | |
| | | | | CN | 110731071 | A | |
| WO | 2017/217456 | A1 | 21 December 2017 | US | 2019/0190675 | A1 | |
| | | | | paragraphs [0088], [0091] | | | |
| | | | | CN | 109314963 | A | |
| WO | 2017/110959 | A1 | 29 June 2017 | US | 2019/0007248 | A1 | |
| | | | | paragraph [0095] | | | |
| | | | | CN | 108464045 | A | |
| JP | 2019-004320 | A | 10 January 2019 | US | 2020/0213901 | A1 | |
| | | | | paragraph [0063] | | | |
| | | | | CN | 110771074 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010